# EUROPEAN PATENT SPECIFICATION

(11) **EP 3 961 604 B1**
(45) Date of publication and mention of the grant of the patent: **09.10.2024**
(21) Application number: 20885009.9
(22) Date of filing: 26.08.2020
(51) Int. Cl.: G09B 9/00, G09B 9/02, G09B 9/04

(54) **TRACTION CONTROL SIMULATION SYSTEM AND TRACTION CONTROL METHOD FOR RAIL VEHICLE**
TRAKTIONSSTEUERUNGSSIMULATIONSSYSTEM UND VERFAHREN ZUR TRAKTIONSSTEUERUNG FÜR SCHIENENFAHRZEUGE
SYSTÈME DE SIMULATION DE COMMANDE DE TRACTION ET PROCÉDÉ DE COMMANDE DE TRACTION POUR VÉHICULE FERROVIAIRE

(30) Priority: 08.11.2019 CN 201911086643; 10.07.2020 CN 202010661449
(43) Date of publication of application: 02.03.2022
(73) Proprietor: CRRC Changchun Railway Vehicles Co., Ltd., Changchun, Jilin 130000 (CN)
(72) Inventor: LUO, Zhaoqiang, Changchun, Jilin 130000 (CN); DING, Xiangqing, Changchun, Jilin 130000 (CN); YANG, Shu, Changchun, Jilin 130000 (CN)
(74) Representative: Behr, Wolfgang
(86) International application number: PCT/CN2020/111286
(87) International publication number: WO 2021/088475

(56) References cited:
- CN-A- 101 794 986
- CN-A- 101 927 777
- CN-A- 103 350 708
- CN-A- 104 071 143
- CN-A- 105 047 036
- CN-A- 105 575 212
- CN-A- 105 575 212
- CN-A- 106 448 333
- CN-A- 110 164 230
- CN-A- 110 942 690
- CN-U- 201 741 299
- CN-U- 205 582 325
- JP-A- 2018 049 258

## Description

The present application claims priorities to Chinese Patent Application No. 201911086643.1, titled "TRACTION CONTROL INTELLIGENT DEBUGGING AND TRAINING SYSTEM AND METHOD FOR URBAN RAILWAY PASSENGER CAR", filed on November 08, 2019 with the China National Intellectual Property Administration, and Chinese Patent Application No. 202010661449.8, titled "TRACTION CONTROL SIMULATION SYSTEM AND TRACTION CONTROL METHOD FOR RAIL VEHICLE", filed on July 10, 2020 with the China National Intellectual Property Administration.

### FIELD

The present disclosure relates to the field of simulation, and in particular, to a traction control simulation system and a traction control method for a rail vehicle.

### BACKGROUND

With the rapid development of urban rail transit in China, the equipment manufacturing level and technology of rail vehicles, such as subways and light rail vehicles, have reached the world's leading level. A traction control system of a rail vehicle can control the operation and braking of the entire vehicle, which has a great impact on the safety of the entire vehicle. Therefore, the debugging and the operation training of the traction control system are necessary. Through the debugging, it is determined whether various functions of the traction control system can be realized normally. Through the operation training, employees can quickly learn a working process and an operating process of the traction control system.

When debugging and performing operation training on the traction control system, a traction control system on a real rail vehicle is generally used. This way of debugging and performing operating training directly on the traction control system on the real rail vehicle may have an impact on the safety of the traction control system if one operation is wrong, and may even affect the stability and the safety of the entire rail vehicle. In addition, the cost of debugging and training on the traction control system on the real rail vehicle is also high.

CN105575212A discloses a practical training device and method used for teaching of an urban rail vehicle control system. The practical training device comprises a driver control panel, an electric control terminal and a PLC (Programmable Logic Controller) controlled simulation object, wherein the driver control panel is connected with the electric control terminal through a communication cable; and the electric control terminal is connected with the PLC controlled simulation object through a communication cable.

CN110164230A discloses a practical training and examination equipment for maintaining and debugging a city railway electric control system. The system includes: a control system, a train traction control circuit wiring training module, a train lighting control circuit wiring training module, a train emergency parking brake and bogie monitoring and control circuit wiring training module and a train automatic door control circuit wiring training module.

### SUMMARY

In view of the above, a traction control simulation system and a traction control method for a rail vehicle are provided according to independent claims 1 and 8. to solve the problems that the safety and stability of the vehicle are affected and the cost is high due to the debugging and training of the traction control system on the real rail vehicle in the prior art.

To solve the above technical problems, following technical solutions are provided according to embodiments of the present disclosure.

A traction control simulation system for a rail vehicle includes: a control line set, two main control devices and at least one execution device, where the two main control devices and the execution device are connected to the control line set; the two main control devices are configured to implement a traction control function and a traction monitoring function of a traction control device on the rail vehicle, and only one main control device of the two main control devices is in a control state at the same time; a control line in the control line set is configured to implement a data transmission function of a train line on the rail vehicle; the execution device is configured to implement an operation execution function of a traction execution equipment on the rail vehicle; and the two main control devices are further configured to: transmit a vehicle control command to the execution device through the control line in the control line set, and to control the execution device to perform an operation corresponding to the vehicle control command.

In an embodiment, the two main control devices each includes: a display simulation unit, a processor simulation unit, a driver controller traction control simulation circuit, a running direction and traction brake control simulation circuit, a high-speed circuit breaker control simulation circuit, a traction safety loop simulation circuit, an automatic train protection (ATP) zero-speed delay control simulation circuit, and a traction converter control simulation circuit;
where the display simulation unit, the driver controller traction control simulation circuit, the running direction and traction brake control simulation circuit, and the traction converter control simulation circuit are connected to the processor simulation unit; the ATP zero-speed delay control simulation circuit is connected to the driver controller traction control simulation circuit; the traction safety loop simulation circuit, the high-speed circuit breaker control simulation circuit, the running direction and traction brake control simulation circuit, and the driver controller traction control simulation circuit are connected to the control line set; and the traction converter control simulation circuit and the processor simulation unit are both connected to the execution device;
where the display simulation unit is configured to display data to be displayed sent by the processor simulation unit;
where the driver controller traction control simulation circuit is configured to generate and output a driver controller traction command;
where the running direction and traction brake control simulation circuit is configured to generate and output a running direction control command and a traction brake command;
where the high-speed circuit breaker control simulation circuit is configured to generate and output a high-speed circuit breaker control command;
where the traction safety loop simulation circuit is configured to generate and output a traction safety loop control command;
where the ATP zero-speed delay control simulation circuit is configured to establish a traction safety loop;
where the traction converter control simulation circuit is configured to generate and output a traction converter control command; and
where the processor simulation unit is configured to: receive commands from the driver controller traction control simulation circuit, the running direction and traction brake control simulation circuit, and the traction converter control simulation circuit, and output the commands to the display simulation unit to display.

In an embodiment, in the traction safety loop simulation circuit, a normally-open contact of a driver's cab activation relay in a control state, a normally-closed contact of a door selecting switch, a normally-open contact of an ATP cutting relay, a normally-open contact of a left door being closed relay, a normally-open contact of a right door being closed relay, a normally-open contact of a brake relief relay, a normally-open contact of an emergency brake relief relay, and a normally-open contact of a parking brake relief relay are connected in series, and then is connected to a traction safety control line in the control line set; the traction safety control line is connected to a normally-closed contact of the driver's cab activation relay in a non-control state, to form a closed traction safety monitoring loop; a normally-open contact of a door being closed bypass switch is connected in parallel with a circuit including the normally-open contact of the left door being closed relay and the normally-open contact of the right door being closed relay connected in series; a normally-open contact of an ATP zero-speed relay is connected in parallel with a circuit including the normally-open contact of the brake relief relay and the normally-open contact of the emergency brake relief relay connected in series.

In an embodiment, the number of the execution device is three, and each execution device includes: a high-speed circuit breaker simulation unit, a traction converter simulation unit and a traction motor execution simulation unit;
where the high-speed circuit breaker simulation unit and the processor simulation unit are connected to the traction converter simulation unit, respectively;
where the traction converter control simulation circuit is connected to the traction converter simulation unit and the traction motor execution simulation unit, respectively;
where the high-speed circuit breaker simulation unit and the traction converter simulation unit are connected to the control line set, respectively; and
where the high-speed circuit breaker simulation unit obtains electrical energy from a pantograph connected to the high-speed circuit breaker simulation unit.

In an embodiment, the traction converter simulation unit includes: a traction converter unit internal circuit and a traction converter unit external interface circuit;
where the traction converter unit internal circuit includes: a logic controller, a frequency converter, a forward command input relay, a backward command input relay, a brake command input relay, a traction command input relay, a traction safety command input relay, a reset command input relay, a standby mode command input relay, a contact net position command input relay, a first working power input relay, a second working power input relay, a high-speed circuit breaker sub-command input relay, a brake status loop command input relay, a high-speed circuit breaker status feedback command input relay, an output relay for outputting a K-line contactor (KIC) high voltage output command, an output relay for outputting a command to allow a high-speed circuit breaker to close, an output relay for outputting a high-speed circuit breaker closing command, an output relay for outputting a high-speed circuit breaker keep-on command, an output relay for outputting a brake status command, an output relay for outputting a standby brake status command, an output relay for outputting a traction status command, and a traction main circuit power supply contactor;
where the logic controller includes a CPU module and an I/O module, the I/O module is connected to the frequency converter, the CPU module is configured to generate a frequency converter control signal, and the I/O module is configured to transmit the frequency converter control signal to the frequency converter;
where the forward command input relay, the backward command input relay, the brake command input relay, the traction command input relay, the traction safety command input relay, the reset command input relay, the standby mode command input relay, the contact net position command input relay, the first working power input relay, the second working power input relay, the high-speed circuit breaker sub-command input relay, the brake status loop command input relay, and the high-speed circuit breaker status feedback command input relay are connected to an input port of the logic controller; and
where the output relay for outputting the KIC high voltage output command, the output relay for outputting the command to allow the high-speed circuit breaker to close, the output relay for outputting the high-speed circuit breaker closing command, the output relay for outputting the high-speed circuit breaker keep-on command, the output relay for outputting the brake status command, the output relay for outputting the standby brake status command, the output relay for outputting the traction status command, and the traction main circuit power supply contactor are connected to an output port of the logic controller.

In an embodiment, the high-speed circuit breaker simulation unit includes: a closed high-speed circuit breaker signal input relay, a K-line contactor (KIC) high-voltage signal input relay, a closing permission signal input relay, a holding signal input relay, a high-speed circuit breaker closing contactor, and a high-speed circuit breaker closing enabling relay, and a protection delay relay;
where the closed high-speed circuit breaker signal input relay is connected to an external interface of a closed high-speed circuit breaker, and is configured to receive a signal to close the high-speed circuit breaker;
where the KIC high-voltage signal input relay is connected to a KIC high-voltage external interface, and is configured to receive a KIC high-voltage effective signal;
where the closing permission signal input relay is connected to a closing permission external interface, and is configured to receive a closing permission signal of the high-speed circuit breaker;
where the holding signal input relay is connected to a holding signal external interface, and is configured to receive a holding signal of the high-speed circuit breaker;
where the high-speed circuit breaker closing enabling relay is connected to a normally-open contact of the closing permission signal input relay, and the normally-open contact of the closing permission signal input relay is connected in series with a normally-open contact of the closed high-speed circuit breaker signal input relay, so as to control an action of the high-speed circuit breaker closing enabling relay through two sets of contacts connected in series;
where the protection delay relay is connected to a normally-closed contact of the KIC high-voltage signal input relay, and the normally-closed contact of the KIC high-voltage signal input relay is connected in series with a normally-open contact of the high-speed circuit breaker closing contactor, so as to control an action of the protection delay relay through two sets of contacts connected in series;
where the high-speed circuit breaker closing contactor is connected to a normally-closed contact of the protection delay relay, the normally-closed contact of the protection delay relay is connected to the normally-open contact of the closing permission signal input relay, a normally-open contact of a signal input relay is connected in parallel with the normally-open contact of the high-speed circuit breaker closing enabling relay, and is connected with the normally-open contact of the closing permission signal input relay, so as to control an action of the high-speed circuit breaker closing contactor through four sets of contacts connected in series and parallel.

In an embodiment, the train line includes: a traction safety control line, a traction control line, a traction and brake control line, a running direction and high-speed circuit breaker control line; and
where the traction safety control line is connected to the traction safety loop simulation circuit, the traction control line is connected to the driver controller traction control simulation circuit, the traction and brake control line is connected to the running direction and traction and brake control simulation circuit, and the running direction and high-speed circuit breaker control line is connected to the running direction and traction and brake control simulation circuit and the high-speed circuit breaker control simulation circuit, respectively.

A traction control method, applied to the main control device of the two main control devices in the control state in the above-mentioned traction control simulation system, and the traction control method includes:
receiving multiple control commands input by an user sequentially in chronological order and outputting each of the multiple control commands received to each execution device through a corresponding control line in the control line set;
determining, by each execution device, whether each of the multiple control commands is a valid control command in turn; and
executing an operation corresponding to the valid control command in case of determining that a control command is the valid control command.

In an embodiment, the receiving multiple control commands input by the user sequentially in chronological order and outputting each of the multiple control commands to each execution device through the corresponding control line in the control line set includes:
receiving a current control command input by the user;
outputting the current control command to each execution device through a control line corresponding to the current control command;
receiving a next control command input by the user in a case that the current control command is executed by a target execution device controlled by the current control command successfully; and
updating the next control command to the current control command, executing again the step of outputting the current control command to each execution device through a control line corresponding to the current control command in sequence, until all control commands input by the user are received.

Compared with the prior art, the present disclosure has the following beneficial effects.

A traction control simulation system and a traction control method for a rail vehicle are provided according to embodiments of the present disclosure. The traction control simulation system for a rail vehicle includes a control line set, two main control devices and at least one execution device, which conforms to the layout of a traction control device of a master vehicle and a traction execution equipment of an executive vehicle in the rail vehicle. In the present disclosure, the two main control device transmit a vehicle control command to an execution device through a control line in the control line set, to control the execution device to execute an operation corresponding to the vehicle control command, which conforms to the way of controlling the traction execution equipment of the executive vehicle by the traction control device of the master vehicle in the rail vehicle. The difference between the traction control simulation system of the present disclosure and a traction control system of an real rail vehicle is small, that is, a simulation degree of the traction control simulation system of the present disclosure is relatively high, and thus the traction control simulation system of the present disclosure can be used to replace the traction control system of the real rail vehicle during debugging and training. Since the traction control simulation system of the present disclosure exists independently, the operation safety is higher, and the running stability and the safety of the real rail vehicle are not affected. In addition, the traction control system of the real rail vehicle is not used for training, and the traction control simulation system of the present disclosure can be used for multiple trainings, thereby saving costs.

### BRIEF DESCRIPTION OF THE DRAWINGS

In order to more clearly illustrate technical solutions in embodiments of the present disclosure or in the conventional technology, drawings used in the description of the embodiments or the conventional technology are introduced briefly hereinafter. Apparently, the drawings described in the following illustrate some embodiments of the present disclosure; other drawings may be obtained by those ordinarily skilled in the art based on these drawings without any creative efforts.
Figure 1 is a schematic structural diagram of a traction control simulation system for a rail vehicle according to an embodiment of the present disclosure;
Figure 2 is a schematic structural diagram of a traction control simulation system for a rail vehicle according to an embodiment of the present disclosure;
Figure 3 is a schematic structural diagram of a traction safety loop simulation circuit according to an embodiment of the present disclosure;
Figure 4 is a schematic structural diagram of an internal circuit of a traction converter unit according to an embodiment of the present disclosure;
Figure 5 is a schematic structural diagram of a driver controller of a main control device according to an embodiment of the present disclosure;
Figure 6a is a schematic structural diagram of a driver controller traction control simulation circuit according to an embodiment of the present disclosure;
Figure 6b is a schematic structural diagram of a traction control line according to an embodiment of the present disclosure;
Figure 6c is a schematic structural diagram of a traction safety control line according to an embodiment of the present disclosure;
Figure 7a is a schematic structural diagram of a running direction and traction brake control simulation circuit according to an embodiment of the present disclosure;
Figure 7b is a schematic structural diagram of a running direction and high-speed circuit breaker control line according to an embodiment of the present disclosure;
Figure 7c is a schematic structural diagram of a traction and brake control line according to an embodiment of the present disclosure;
Figure 8 is a schematic structural diagram of a high-speed circuit breaker control circuit according to an embodiment of the present disclosure;
Figure 9 is a schematic structural diagram of an ATP zero-speed delay control simulation circuit according to an embodiment of the present disclosure;
Figure 10 is a schematic structural diagram of an external interface circuit of a traction converter unit according to an embodiment of the present disclosure;
Figure 11 is a schematic structural diagram of a high-speed circuit breaker simulation unit according to an embodiment of the present disclosure; and
Figure 12 is a schematic structural diagram of a traction converter control simulation circuit according to an embodiment of the present disclosure.

### DETAILED DESCRIPTION

The technical solutions in the embodiments of the present disclosure will be described clearly and completely hereinafter in conjunction with the drawings in the embodiments of the present disclosure. Apparently, the described embodiments are only a part of the embodiments of the present disclosure, rather than all embodiments. Based on the embodiments in the present disclosure, all of other embodiments, made by the person skilled in the art without any creative efforts, fall into the scope of protection of the present disclosure.

When debugging and performing operation training on the traction control system, a traction control system on a real rail vehicle is generally used. This way of debugging and performing operating training directly on the traction control system on the real rail vehicle may have an impact on the safety of the traction control system if one operation is wrong, and may even affect the stability and the safety of the entire rail vehicle. In addition, the cost of debugging and training on the traction control system on the real rail vehicle is also high.

After research, the inventor found that once a traction control simulation system corresponding to a traction control system on a real rail vehicle can be manufactured, the traction control simulation system can be used for debugging and operation training. So the traction control system of the real rail vehicle is studied, and a corresponding traction control simulation system is developed.

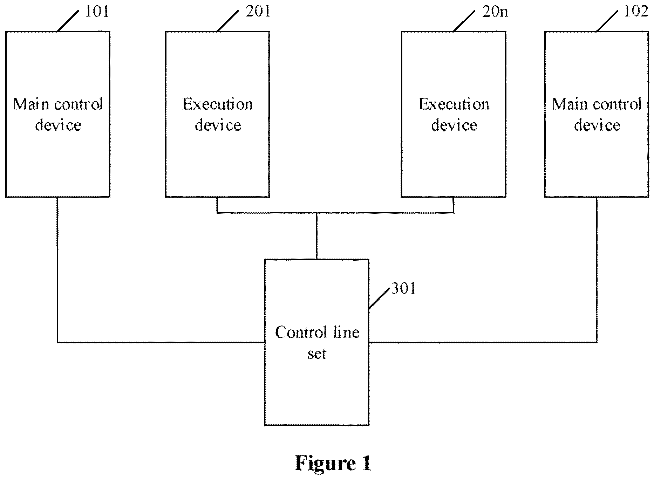

Specifically, referring to Figure 1, a traction control simulation system for a rail vehicle includes: a control line set 301, two main control devices (101 and 102 as shown in Figure 1) and at least one execution device (201-20n as shown in Figure 1). The two main control devices and the execution device are all connected to the control line set. The two main control devices are configured to implement a traction control function and a traction monitoring function of a traction control device on the rail vehicle. A control line in the control line set is configured to implement a data transmission function of a train line on the rail vehicle. The execution device is configured to implement an operation execution function of a traction execution equipment on the rail vehicle. The two main control devices are configured to: transmit a vehicle control command to the execution device through the control line in the control line set, and to control the execution device to perform an operation corresponding to the vehicle control command.

In practice, the two main control devices simulate a traction control device in a cab of a real rail vehicle. Only one main control device of the two main control devices is in a control state at the same time, for example, when the rail vehicle is moving from south to north, a first main control device is in a control state; and when the rail vehicle is traveling from north to south, a second main control device is in a control state. The number of execution devices may be configured according to the number of execution cars on the real rail vehicle, that is, the number of intermediate cars. After the two main control devices are connected to the execution device, a high-speed circuit breaker simulation unit and a traction converter simulation unit on the execution device are controlled through a control circuit and a driver controller on the main control device, thus the speed regulation and operation, and a traction safety interlock protection function of a traction motor are realized.

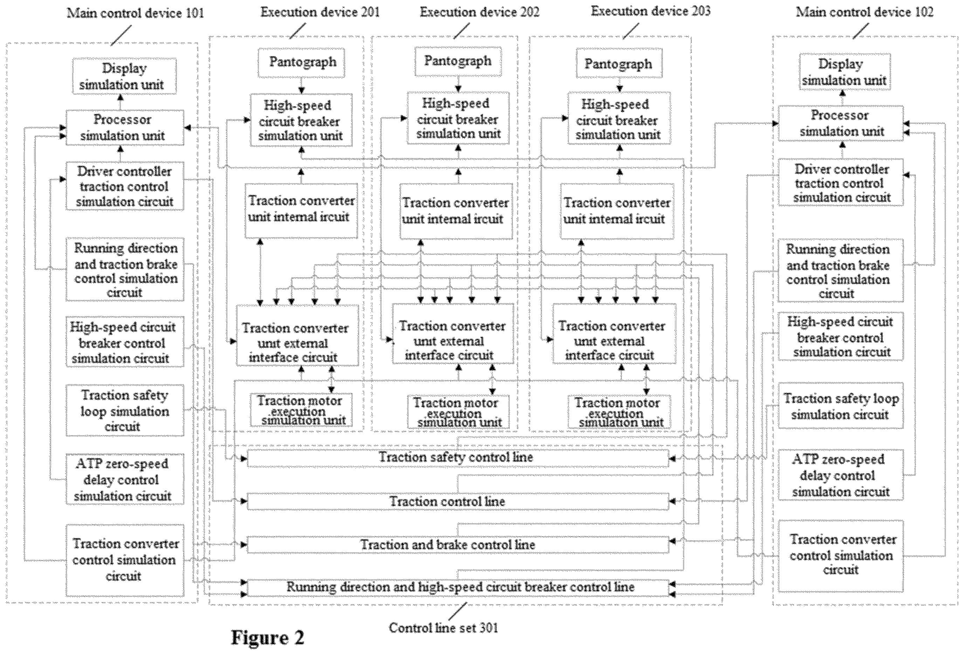

In an embodiment of the present disclosure, referring to Figure 2, a specific structure of the two main control devices, the at least one execution device, and the control line set are shown. In this embodiment, the number of execution devices is 3 as an example (see the execution devices 201-203 in Figure 2).

The two main control devices each includes: a display simulation unit, a processor simulation unit, a driver controller traction control simulation circuit, a running direction and traction brake control simulation circuit, a high-speed circuit breaker control simulation circuit, a traction safety loop simulation circuit, an automatic train protection (ATP) zero-speed delay control simulation circuit, and a traction converter control simulation circuit.

The display simulation unit, the driver controller traction control simulation circuit, the running direction and traction brake control simulation circuit, and the traction converter control simulation circuit are all connected to the processor simulation unit; the ATP zero-speed delay control simulation circuit is connected to the driver controller traction control simulation circuit; the traction safety loop simulation circuit, the high-speed circuit breaker control simulation circuit, the running direction and traction brake control simulation circuit, and the driver controller traction control simulation circuit are all connected to the control line set; and the traction converter control simulation circuit and the processor simulation unit are both connected to the execution device.

Specifically, the display simulation unit and the processor simulation unit are connected through a network cable, the driver controller traction control simulation circuit and the processor simulation unit are connected through a wire, and the running direction and traction brake control simulation circuit and the processor simulation unit are connected through a wire, and the traction converter control simulation circuit and the processor simulation unit are connected through a wire.

The display simulation unit simulates a touch display on the real rail vehicle, which is used for displaying data to be displayed sent by the processor simulation unit, to realize human-computer interaction. The data to be displayed may be various types of commands received by the processor simulation unit, such as a driver controller traction command, a running direction control command, a traction brake command, a high-speed circuit breaker control command, a traction safety loop control command, a traction converter control command, or the like in the following.

The driver controller traction control simulation circuit simulates a driver controller traction command output circuit on the real rail vehicle, and is configured to generate and output a driver controller traction command.

The running direction and traction brake control simulation circuit simulates a running direction and traction brake command control circuit on the real rail vehicle, and is configured to generate and output a running direction control command and a traction brake command.

The high-speed circuit breaker control simulation circuit simulates a high-speed circuit breaker control circuit on the real rail vehicle, and is configured to generate and output a high-speed circuit breaker control command.

The traction safety loop simulation circuit simulates a traction safety loop circuit on the real rail vehicle, and is configured to generate and output a traction safety loop control command.

The ATP zero-speed delay control simulation circuit simulates an ATP zero-speed delay control circuit, and is configured to establish a traction safety loop. The ATP zero-speed delay control simulation circuit is a power-off delay time relay. When a simulated train speed is lower than 5KM/H, it is energized, that is, the train is considered to be stationary. Since a normally-open contact thereof is connected in parallel with normally-open contacts of all brake relief relays and emergency brake loop relays, that is, when the vehicle is stationary and starts to run within 5 seconds, once the ATP zero-speed delay is powered off, a traction safety loop can be established even if the brake is relief. When braking conditions or emergency braking conditions occur under operating conditions, since the zero-speed relay =24-K07 has been disconnected, the traction safety loop is disconnected, and the traction converter will stop outputting traction, where =24-K07 is an identification number of the zero-speed relay, and other identification numbers in the present disclosure are similar.

The traction converter control simulation circuit simulates a circuit for controlling a traction converter reset command, a standby mode command, and a car wash mode command on the real rail vehicle. And the traction converter control simulation circuit is configured to generate and output a traction converter control command. The traction converter control simulation circuit and the circuit for controlling a traction converter reset command, a standby mode command, and a car wash mode command are both control circuits that can manually control a traction converter to enter a special mode. When an alarm or fault occurs in the traction converter simulation unit, a traction converter reset command button can be used to reset the traction converter unit. When a standby mode command switch is switched to a standby mode position, the traction converter simulation unit enters a standby mode. The maximum speed is limited to 40 kilometers per hour, thus the traction converter simulation unit only receives a traction command at the 50% and 100% positions of a driver controller handle. When a car wash mode command switch is switched to a car wash position, the traction converter unit enters a car wash mode. As long as the driver controller handle is in a traction sector, the traction converter simulation unit controls the traction motor to run at a speed of 3km/h.

The processor simulation unit simulates a central processing unit on the real rail vehicle, and is configured to: receive commands from the driver controller traction control simulation circuit, the running direction and traction brake control simulation circuit, and the traction converter control simulation circuit, and output the commands to the display simulation unit to display.

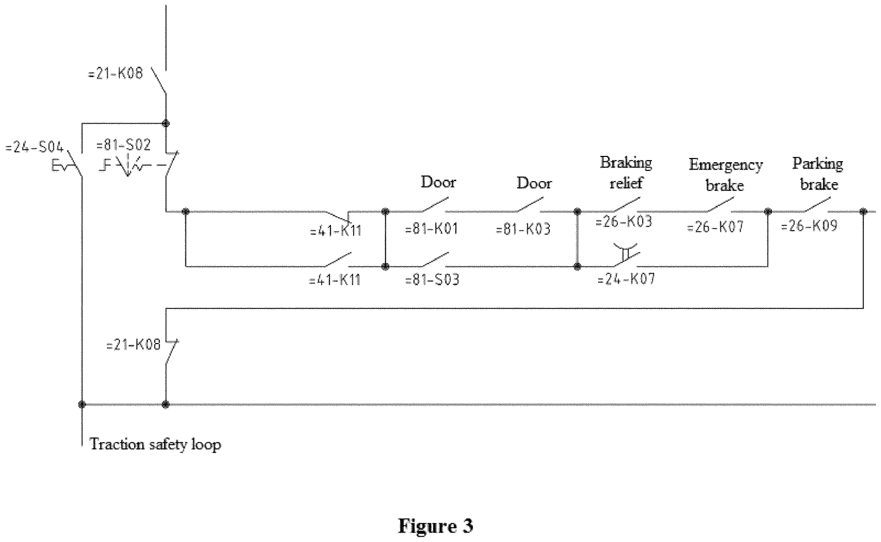

Referring to Figure 3, the traction safety loop simulation circuit includes: a normally-open contact of a driver's cab activation relay =21-K08 in a control state, a normally-closed contact of a driver's cab activation relay =21-K08 in an non-control state, a normally-closed contact of a door selecting switch =81-S01, a normally-open contact and a normally-closed contact of an ATP cutting relay =41-K11, a normally-open contact of a brake relief relay =26-K03, a normally-open contact of an emergency brake relief relay =26-K07, a normally-open contact of a parking brake relief relay =26-K09, a normally-open contact of an ATP zero-speed relay =24-K07, a normally-open contact of a left door being closed relay =81-K01, a normally-open contact of a right door being closed relay =81-K03, a normally-open contact of a door being closed bypass switch =81-S03, a traction safety loop bypass switch =24-S04, and normally closed contacts of driver's cab activation relays =21-K08 of the two main control units.

The traction safety loop simulation circuit, the normally-open contact of the driver's cab activation relay in the control state, the normally-closed contact of the door selecting switch, the normally-open contact of the ATP cutting relay, the normally-open contact of the left door being closed relay, the normally-open contact of the right door being closed relay, the normally-open contact of the brake relief relay, the normally-open contact of the emergency brake relief relay, and the normally-open contact of the parking brake relief relay are connected in series, and then is connected to the traction safety control line in the control line set. The traction safety control line is connected to the normally-closed contact of the driver's cab activation relay in the non-control state, to form a closed traction safety monitoring loop. The normally-open contact of the door being closed bypass switch is connected in parallel with a circuit in which the normally-open contact of the left door being closed relay and the normally-open contact of the right door being closed relay are connected in series. The normally-open contact of the ATP zero-speed relay is connected in parallel with a circuit in which the normally-open contact of the brake relief relay and the normally-open contact of the emergency brake relief relay are connected in series.

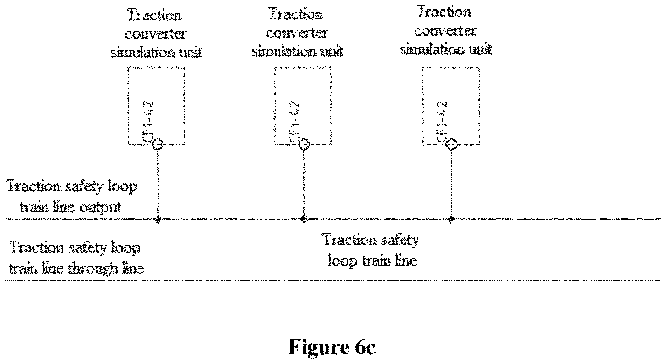

When the driver's cab activation relay =21-K08 is activated, in a case that doors on both sides are closed (that is, =81-K01 and =81-K03 are activated) or the door being closed bypass is closed, and all braking mechanisms are in the braking state but the vehicle is in the stationary state, an emergency braking loop is established, and the parking brake relief relay =26-K09 is in activated state. At this time, a traction safety signal is sent to a safety loop train line in Figure 6c, and is passed through the safety loop train line in Figure 6c and to the chaser. Referring to Figure 3, since the driver's cab activation relay =21-K08 of the chaser is in an inactive state, a normally-closed contact thereof is closed, and the traction safety signal is sent to a chaser traction safety loop train line to output, to enable three simulated traction converters, which is shown in Figure 6c, and then the traction safety signal is returned to the driving car. When the traction safety loop cannot be established, the traction safety loop train line can be energized through the traction safety loop bypass switch.

The establishment of the traction safety loop simulation circuit is a necessary condition to ensure the normal operation of the traction system. A traction safety loop includes contacts of the two main control devices and some relays of the execution unit. The loop connects all points that may affect train traction safety in series. Conditions for establishing the traction safety loop are: a driver's cab of the main control device 101 or the main control device 102 has been activated, a door selecting switch at the end of the activated driver's cab is at the "0" position, an ATP system has been cut off, left doors were all closed, right doors were all closed, all brakes have been relieved, an emergency braking loop has been established, all parking brakes have been relieved, and the tail car has been assembled through the control line. And the traction safety loop is established through the activation relay in the driver's cab at the inactive end, and the control line corresponding to the traction safety loop is energized. An external interface circuit of the traction converter unit receives an command to establish the traction safety loop through the control line.

The number of the execution device is three, and each execution device includes: a high-speed circuit breaker simulation unit, a traction converter simulation unit and a traction motor execution simulation unit. Further, the excitation device may also include a pantograph, which is configured to provide high-voltage power to the high-speed circuit breaker simulation unit.

The high-speed circuit breaker simulation unit and the processor simulation unit are respectively connected to the traction converter simulation unit. The traction converter control simulation circuit is respectively connected to the traction converter simulation unit and the traction motor execution simulation unit. The high-speed circuit breaker simulation unit and the traction converter simulation unit are respectively connected to the control line set. The high-speed circuit breaker simulation unit obtains electric energy from the pantograph connected to the high-speed circuit breaker simulation unit.

The traction converter simulation unit includes: a traction converter unit internal circuit and a traction converter unit external interface circuit.

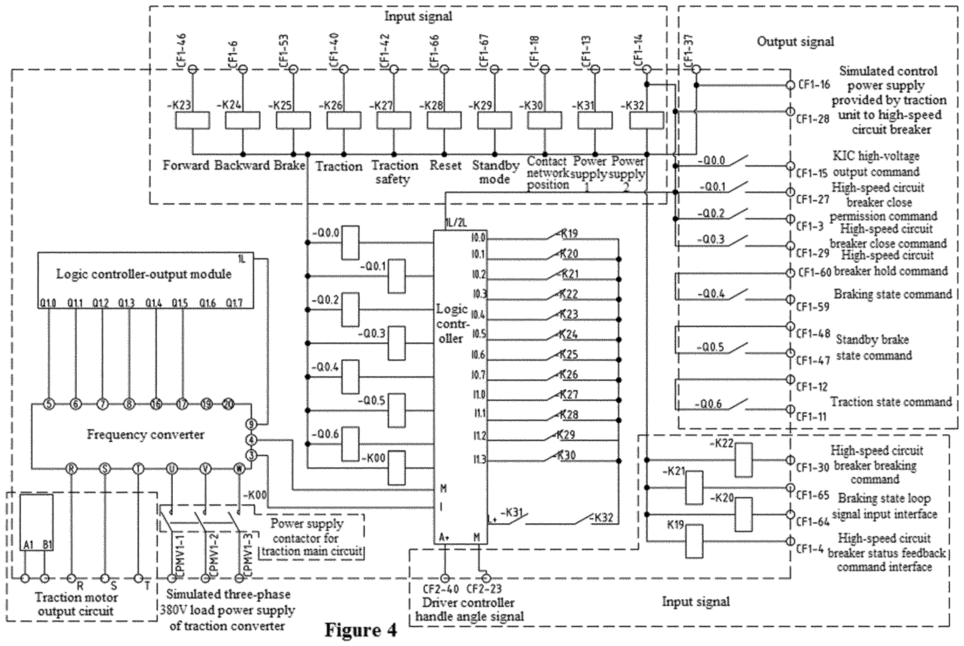

Referring to Figure 4, the traction converter unit internal circuit includes: a logic controller, a frequency converter, a forward command input relay -K23, a backward command input relay -K24, a brake command input relay -K25, a traction command input relay -K26, a traction safety command input relay -K27, a reset command input relay -K28, a standby mode command input relay -K29, a contact net position command input relay -K30, a first working power input relay -K31, a second working power input relay -K32, a high-speed circuit breaker sub-command input relay -K22, a brake status loop command input relay, -K20 and -K21, a high-speed circuit breaker status feedback command input relay -K19, an output relay -Q0.0 for outputting a K-line contactor (KIC) high voltage output command, an output relay -Q0.1 for outputting a command to allow a high-speed circuit breaker to close, an output relay -Q0.2 for outputting a high-speed circuit breaker closing command, an output relay -Q0.3 for outputting a high-speed circuit breaker keep-on command, an output relay -Q0.4 for outputting a brake status command, an output relay -Q0.5 for outputting a standby brake status command, an output relay -Q0.6 for outputting a traction status command, and a traction main circuit power supply contactor -K00.

The logic controller includes a CPU module and an I/O module, the I/O module is connected to the frequency converter, the CPU module is configured to generate a frequency converter control signal (such as control signals for forward rotation, reverse rotation, stop, start, and electric brake), and the I/O module is configured to transmit the frequency converter control signal to the frequency converter. The forward command input relay, the backward command input relay, the brake command input relay, the traction command input relay, the traction safety command input relay, the reset command input relay, the standby mode command input relay, the contact net position command input relay, the first working power input relay, the second working power input relay, the high-speed circuit breaker sub-command input relay, the brake status loop command input relay, and the high-speed circuit breaker status feedback command input relay are all connected to an input port of the logic controller. The output relay for outputting a KIC high voltage output command, the output relay for outputting a command to allow a high-speed circuit breaker to close, the output relay for outputting a high-speed circuit breaker closing command, the output relay for outputting a high-speed circuit breaker keep-on command, the output relay for outputting a brake status command, the output relay for outputting a standby brake status command, the output relay for outputting a traction status command, and the traction main circuit power supply contactor are all connected to an output port of the logic controller.

Conditions for a traction converter to output a traction force are as follows: a high-voltage signal is valid, a high-speed circuit breaker is closed, a running direction signal is valid, a driver controller is in a traction position, a traction force command is established, a traction safety loop is established, and all brakes are relieved. Only all of the above conditions are satisfied, the traction converter will output traction and control the rotation of the traction motor. The status of the traction converter simulation unit and the status of the high-speed circuit breaker simulation unit are transmitted to a central processing unit through the network, and displayed on a touch display. A traction safety command, traction current, a traction force, a traction motor speed, a KIC status, a K-charging contactor (KCCC) status, a traction control unit status, a circuit breaker status of the high-speed circuit breaker unit, and a high-voltage effective signal are displayed.

The logic controller includes a programmable controller as a control core for signal reception and transmission, and a network interface is reserved. A direction backward signal input interface "CF1-6" is connected to a backward command input relay, and a backward command is transmitted to a logic controller input port "10.5". A direction forward signal input interface "CF1-46" is connected to a forward command input relay, and a forward command is transmitted to a logic controller input port "10.4". A traction safety signal input interface "CF1-42" is connected to a traction safety command input relay, and a traction safety command is transmitted to a logic controller input port "11.0". A brake command signal input interface "CF1-53" is connected to a brake command input relay, and a brake command is transmitted to a logic controller input port "10.6". A traction command signal input interface "CF1-40" is connected to a traction command input relay, and a traction command is transmitted to a logic controller input port "I0.7". A reset signal input interface "CF1-66" is connected to a reset command input relay, and a reset command is transmitted to a logic controller input port "I1.1". A standby mode signal input interface "CF1-67" is connected to a standby mode command input relay, and a standby mode command is transmitted to a logic controller input port "I1.2". A signal of a mode switch being in the state of the contact net input interface "CF1-18" is connected to a contact net position command input relay, and a state command of the contact net position is transmitted to a logic controller input port "I1.3".

Interfaces "CF1-13" and "CF1-14" simulate a positive pole 110V of the working power supply of the traction device, which is connected to a first working power input relay and a second working power input relay. After contacts of the two power input relays are connected in series, a valid signal of the first working power supply and a valid signal of the second working power supply are transmitted to a COM port "L1" of the logic controller. An interface "CF1-37" simulates a negative pole 0V of the working power supply of the traction device, and is connected to ports "1L/2L" of a common terminal of the logic controller input module. A high-speed circuit breaker sub-signal input interface "CF1-30" is connected to a high-speed circuit breaker sub-command input relay, and a high-speed circuit breaker sub-command is transmitted to a logic controller input port "I0.3". Brake state loop signal input interfaces "CF1-64" and "CF1-65" are connected to two brake state loop command input relays, and status of the brake loop is transmitted to a logic controller input ports "10.1" and "I0.2". Traction analog input interfaces "CF2-23" and "CF2-40" are connected to ports "A+" and "M" of the logic controller, to receive traction signals. "CF1-04" is a feedback command interface for simulating the status of the high-speed circuit breaker received by the traction converter simulation unit, and it is connected to a feedback command input relay of the status of the high-speed circuit breaker, and is configured to transmit a feedback command of the status of the high-speed circuit breaker to a logic controller input port "10.0".

Interface "CF1-3" simulates an interface for sending a high-speed circuit breaker closed output command by the traction converter simulation unit. Interface "CF1-15" simulates an interface for sending a KIC high-voltage output command by the traction converter simulation unit. When the high-speed circuit breaker is closed, the traction converter simulation unit outputs "1" if it detects that the high voltage is normal. Interface "CF1-27" simulates an interface for sending an output command that allows the high-speed circuit breaker to be closed by the traction converter simulation unit. Interface "CF1-28" simulates an interface of the traction converter simulation unit, which is used for providing a control power 110V for the high-speed circuit breaker. Interface "CF1-16" simulates an interface of the traction converter simulation unit, which is used for providing a control power 0V for the high-speed circuit breaker. "CF1-29" is a keep-on command for the high-speed circuit breaker provided by the traction converter simulation unit. "CF1-11" and "CF1-12" are output traction status commands, which are used for monitoring the running status of the traction converter simulation unit. "CF1-47" and "CF1-48" are output standby braking status commands, which are used for determining whether the traction converter simulation unit detects the standby braking status. "CF1-59" and "CF1-60" are output braking state commands, which are used for determining whether the traction converter simulation unit detects the braking state.

"CPMV1-1", "CPMV1-2", and "CPMV1-3" simulate the three-phase 380V load power supply of the traction converter simulation circuit, which is used for loads such as cooling fans and inverters, and are connected to the U, V, and W ports on the inverter. "R","S", and "T" simulate traction motor terminals of the traction converter. The connection ports 3 and 4 on the inverter are connected to interfaces M and I of the logic controller, and are configured for transmitting analog speed control signals. The connection port 5 on the inverter is connected to an interface "Q1.0" of an output module of the logic controller, which is the forward rotation command of the inverter. The connection port 6 on the inverter is connected to an interface "Q1.1" of the output module of the logic controller, which is the reverse rotation command of the inverter. The connection port 7 on the inverter is connected to an interface "Q1.2" of the output module of the logic controller, which is the reset command of the inverter. The connection port 8 on the inverter is connected to an interface "Q1.3" of the output module of the logic controller, which is the speed 1 command of the inverter. The connection port 16 on the inverter is connected to an interface "Q1.4" of the output module of the logic controller, which is the speed 2 command of the inverter. The connection port 17 on the inverter is connected to an interface "Q1.5" of the output module of the logic controller, which is the speed 3 command of the inverter. The connection port 9 on the inverter is connected to an interface "1L" of the output module of the logic controller, which is the common terminal connection of the inverter control command. The connection ports 19 and 20 on the frequency converter are the frequency converter status output ports, which are reserved as spare ports in the present disclosure. "Q1.6" and "Q1.7" are digital output interfaces of the output module of the logic controller, which are reserved as spare interfaces in the present disclosure.

In the figures, "A1" and "B1" are speed signal interfaces, which are used for receiving the speed of the traction motor and performing speed closed-loop control.

In practice, if the logic controller detects the following conditions: a high-speed circuit breaker status feedback command input relay feeding back a high-voltage signal valid command and a high-speed circuit breaker closing command, the forward command input relay and the backward command input relay feeding back an operation direction signal valid command, and the traction command input relay feeding back that the driver controller is in the traction position, the traction safety loop being established, and the driver controller handle outputting the traction angle signal. Only the above conditions are all satisfied, the traction converter will output the traction force and control the rotation of the traction motor. The status of the traction converter simulation unit and the status of the high-speed circuit breaker simulation unit are transmitted to the processor simulation unit through the network, and displayed on the man-machine interface. The traction safety command, the traction current, the traction force, the traction of the traction converter motor speed, the KIC high voltage status, the traction control unit status, the circuit breaker status of high-speed circuit breaker unit, and the high voltage effective signals are displayed.

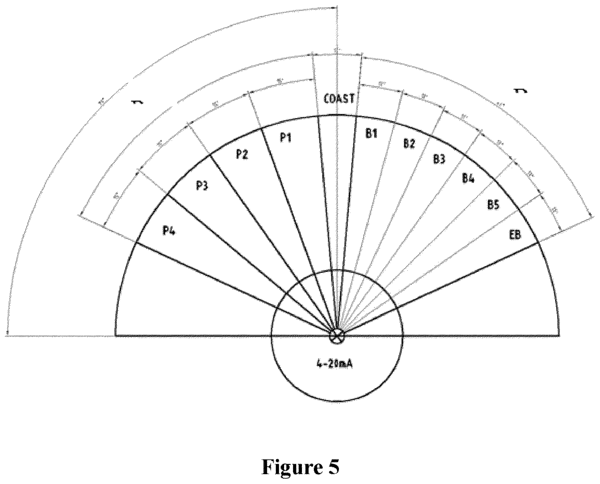

Referring to Figure 5, the driver controller of the main control device includes a traction zone, an idle travel position and a braking zone, where P zone is the traction zone, COAST zone is the idle travel position, and B zone is the braking zone. The traction section is divided into four levels P1, P2, P3, and P4, starting from the idle travel position, traction force in each level increases by 25%. A rotation angle of a driver control handle is reflected by the change of gray codes of an encoder. A current signal of 4-20mA is output to the outside. The braking zone is divided into six levels B1, B2, B3, B4, B5 and EB.

When the driver controller handle is operated, a traction command is output to a traction control line through a driver controller traction control simulation circuit. The traction converter unit of the execution device receives the traction command on the traction control line through the external interface circuit, and controls the traction converter unit to control the magnitude of the traction force of the traction motor according to the traction command. The driver controller advances to the traction position, and the farther away it is from the idle travel position, the greater the traction force is, and vice versa.

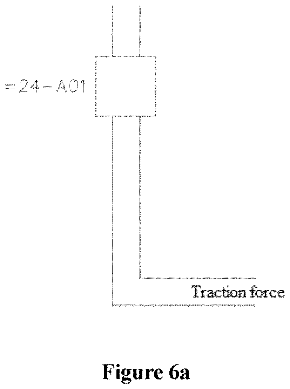

Figure 6a shows a traction control simulation circuit of a driver controller. With the change of an angle of the driver controller handle "=24-A01 ", a current signal corresponding to 4-20mA is transmitted to a car connector.

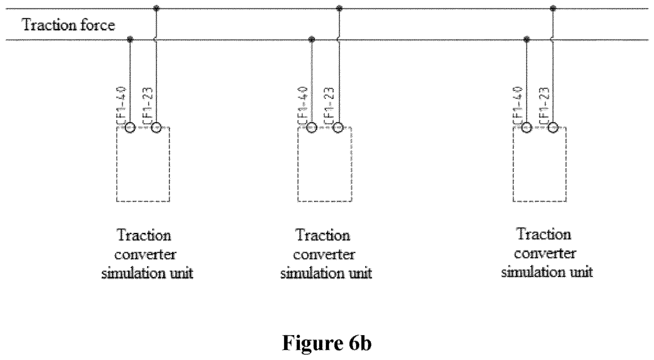

Figure 6b shows traction control lines. Three traction converter simulation units transmit a current signal of 4-20mA corresponding to the change of the angle of the driver controller handle through the train line to signal ports "CF2-40" and "CF2-23". The simulated traction unit uses this value to determine the frequency of the output pulse width modulation (PWM).

Figure 6c shows traction safety control lines. The traction safety loop train line is a through line established by the loop. When the traction safety loop is established, the output of the traction safety loop train line is positive 110V, and "CF1-42" is a traction enabled signal input terminal, and this terminal is positive 110V when the full train traction safety loop is established.

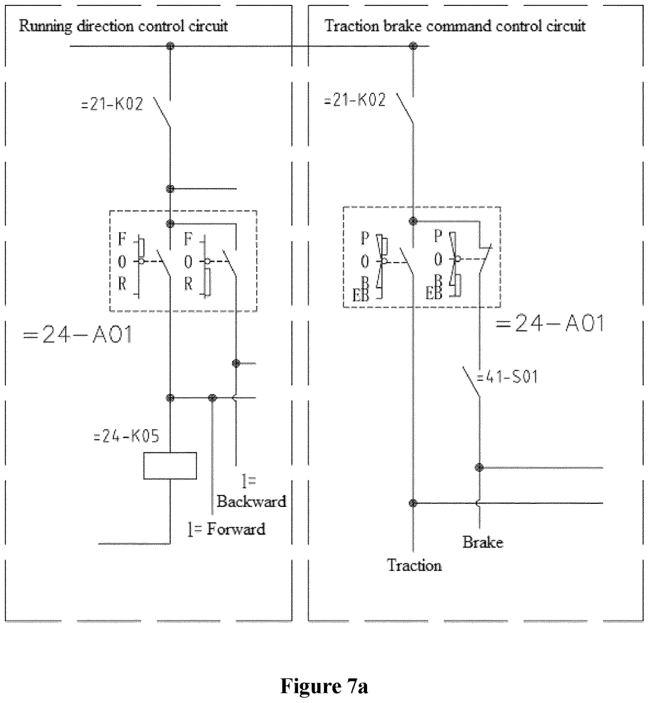

Reference is made to Figure 7a, which is a schematic structural diagram of a running direction and traction brake control simulation circuit. Under the condition of activation of the cab, the relay "=21-K02" is energized. When a direction switch in the driver controller (=24-A01) is selected to "forward", a direction handle is in an F position, a forward signal line is high, and the forward relay "=24-K05" is energized. When the direction switch in the driver controller (=24-A01) is selected to "backward", that is, the direction handle is in an R position, and a backward signal line is high, and the signal is transmitted to the car connector.

A running direction control circuit in the running direction and traction brake control simulation circuit outputs a running direction signal of the traction motor through the running direction switch. The running direction signal is divided into: forward (F), 0 position, and backward (R). When the switch is turned to "forward", the running direction and the running direction train line in the high-speed circuit breaker control line's traction forward signal line is at a high level. When the switch is turned to "backward", the traction backward signal line of the train line in the running direction is at a high level. When the switch is set to the "0" position, the traction of the train line in the running direction forwards and the backward signal line is at a low level. A traction brake command control circuit in the running direction and traction brake control simulation circuit outputs a signal by the driver controller. When the driver controller is pushed to the traction position, the traction command signal line and the brake command signal line in the traction and brake control lines are both at a high level. When the driver controller is pushed to the braking position, the traction command signal line and the brake command signal line in the traction and brake control lines are both at a low level. When the running direction command is at a high level on the forward signal line or the backward signal line, the running direction signal is valid. When the traction command signal line and the brake command signal line are both at a high level, the driver controller is in the traction position.

In Figure 7a, in the traction brake command control circuit, when the driver's cab is activated, the relay "=21-K02" is energized. When the driver controller handle is in the traction sector (P section), the traction command line has a positive power 110V, and the brake command line has a positive power 110V When the driver controller handle is in the braking sector (section B), the traction command line is 0V, and the brake command line is 0V (driver controller handle section, see Figure 5). The selector switch "=41-S01" is an ATP bypass switch, and the switch selects the bypass position (closed) during the debugging process. The signal is transmitted to the car connector.

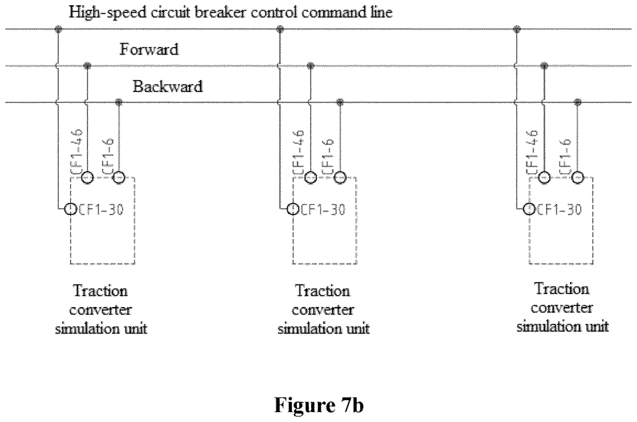

Figure 7b shows the running direction and high-speed circuit breaker control line. The three traction converter simulation units introduce the direction signal into the traction transformer through the forward signal, the backward signal train line and their respective signal input interfaces "CF1-46" and "CF1-6". The simulated traction unit determines the rotation direction of the traction motor based on this signal.

The high-speed circuit breaker control command line transmits the high-speed circuit breaker closing/breaking signal. When "CF1-30" is positive 110V, the traction converter simulation unit controls the high-speed circuit breaker to close, when it is positive 0V, the traction converter simulation unit controls the high-speed circuit breaker to open.

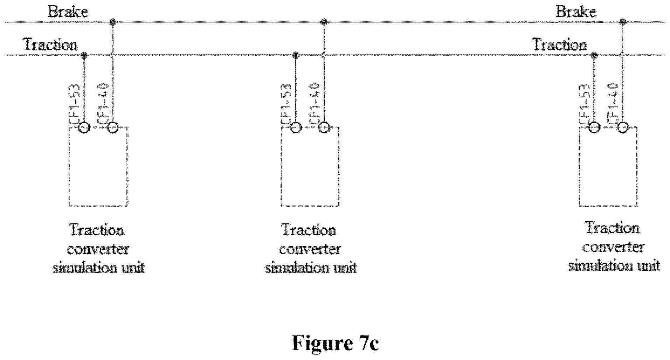

Figure 7c shows the traction and braking control line. The three traction converter simulation units determines whether to output the traction power through the traction command, brake command train line and their respective signal input terminals "CF1-53" and "CF1-40".

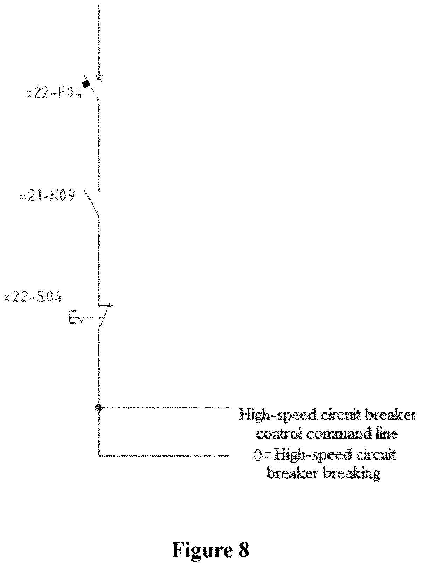

Figure 8 shows the high-speed circuit breaker control circuit. "=22-F04" is the air circuit breaker supplying power to the high-speed circuit breaker control circuit. The power supply circuit breaker is closed, "=21-K09" is activated under the driver's cab activation condition, when the button "=20-S04" of "High-speed circuit breaker off" is in the closed position, the high-speed circuit breaker is closed; when the button "=20-S04" of "High-speed circuit breaker off" is in the off position, the high-speed circuit breaker is opened. And the high-speed circuit breaker control command line transmits the signal through the train line to the car connector. At the same time, the signal is sent to the vehicle information system.

The high-speed circuit breaker control circuit is a control circuit that controls the opening of the high-speed circuit breaker of the execution device through the train line. The high-speed circuit breaker unit can control the traction converter simulation unit to receive the high-voltage electrical signal connected by the pantograph.

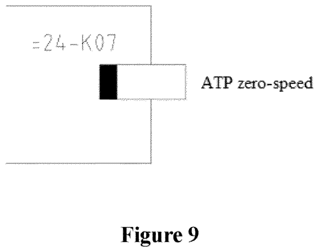

Figure 9 shows an ATP zero-speed delay control simulation circuit, illustrating a power-off delay time relay. When a simulated train speed is lower than 5KM/H, it is energized, that is, the train is considered to be stationary. Since a normally-open contact thereof is connected in parallel with normally-open contacts of all brake relief relays and emergency brake loop relays, that is, when the vehicle is stationary and starts to run within 5 seconds, once the ATP zero-speed delay is powered off, a traction enable signal can be output even if the brake is relief. When braking conditions or emergency braking conditions occur under operating conditions, since the zero-speed relay "=24-K07" has been disconnected, the traction enable signal is disconnected, and the simulated traction converter will not be energized.

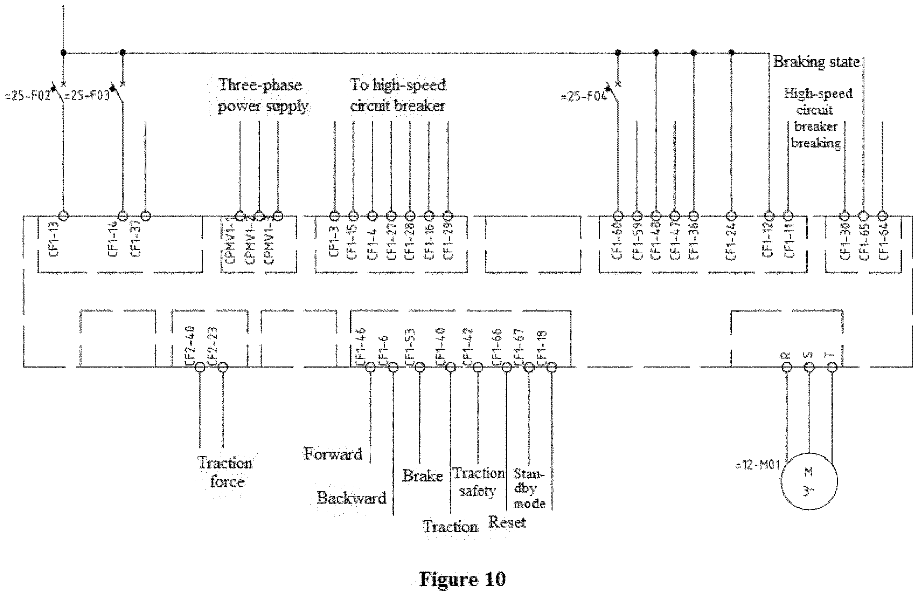

Figure 10 shows an external interface circuit of the traction converter unit. The interface described in the figure is designed in the form of a connector, such that the traction converter simulation unit can be connected to the system conveniently and quickly. There are three sets of the same traction converter simulation unit in the execution device, respectively, a switchboard 1, a switchboard 2, a switchboard 3, and three intermediate power vehicles.

Specifically, "=25-F02", "=25-F03" and "=25-F04" are air circuit breakers for supplying power to the traction converter unit. "=12-M01" is a simulated traction motor. "CF1-6" is a backward direction signal input interface. "CF1-46" is a forward direction signal input interface. "CF1-42" is a traction safety signal input interface. "CF1-53" is an input interface of a brake command signal. "CF1-40" is a traction command signal input interface. "CF1-66" is a reset signal input interface. "CF1-67" is a standby mode signal input interface. "CF1-18" is a signal input interface when a mode switch is in the contact network. "CF1-13" and "CF1-14" are the positive pole 110V of the working power supply of the simulated traction device. "CF1-37" is the negative pole 0V of the working power supply of the simulated traction device. "CF1-30" is a high-speed circuit breaker sub-signal input interface. "CF1-64" and "CF1-65" are input interfaces of the brake state loop signal. "CF2-23" and "CF2-40" are traction simulation input interfaces. "CF1-4" is a feedback command interface of the received high-speed circuit breaker status. "CF1-3" is an output command interface issued to the closing of the high-speed circuit breaker. "CF1-15" is an interface for issuing a high-voltage output command to the high-speed circuit breaker KIC. "CF1-27" is an output command interface sent to the simulated high-speed circuit breaker to allow closing. "CF1-28" is a positive power supply of 110V for high-speed circuit breaker control. "CF1-16" is power supply of 0V for high-speed circuit breaker control. "CF1-29" is a keep-on command for the high-speed circuit breaker. "CF1-11" and "CF1-12" are output traction status commands. "CF1-47" and "CF1-48" are output standby braking status commands. "CF1-59" and "CF1-60" are output braking status commands. "CF1-24" and "CF1-36" are positive input ports of the standby power supply. "R", "S", and "T" are terminal of the traction motor of the simulated traction converter. "CPMV1-1", "CPMV1-2", and "CPMV1-3" are three-phase 380V load power supplies for the traction converter simulation unit.

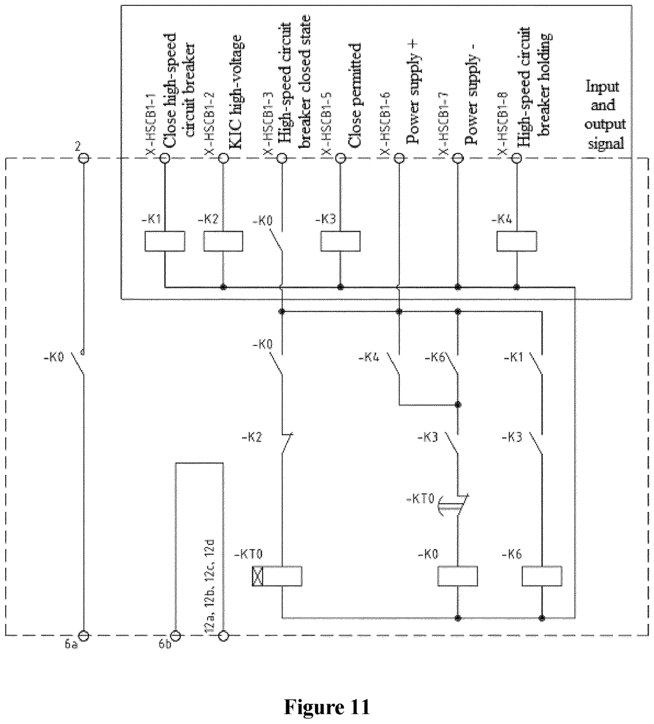

Figure 11 shows a high-speed circuit breaker simulation unit. The high-speed circuit breaker simulation unit includes an internal circuit and an external interface circuit of the high-speed circuit breaker unit. It describes the simulation method of the high-speed circuit breaker of the traction system. "X-HSCB1-1" to "X-HSCB1-8" are interfaces of the traction converter simulation unit, port 6a is a simulated positive electricity input port for a high-voltage valid signal, port 2 is a simulated positive electricity output port for the high-voltage valid signal, port 6b is a simulated negative electricity input port for the high-voltage valid signal, and ports 12a to 12d are simulated negative electricity output ports for the high-voltage valid signal. Functions of the above ports are respectively: a closing high-speed circuit breaker signal, a KIC high voltage signal, a closed status signal fed back by the high-speed circuit breaker to the traction converter simulation unit, a closing permission signal, a positive hold signal for a power supplied by the traction converter simulation unit to the high-speed circuit breaker, and a negative hold signal for the power supplied by the traction converter simulation unit to the high-speed circuit breaker.

The high-speed circuit breaker simulation unit includes: a close high-break signal input relay "-K1", a KIC high-voltage signal input relay "-K2", a close permission signal input relay "-K3", a hold signal input relay "-K4", a high-speed circuit breaker close contactor "-K0", a high-speed circuit breaker close enable relay "-K6", and a protection delay relay "-KT0".

The close high-speed circuit breaker signal input relay is connected to an external interface of a closed high-speed circuit breaker, and is configured to receive a signal to close the high-speed circuit breaker. The KIC high-voltage signal input relay is connected to a KIC high-voltage external interface, and is configured to receive a KIC high-voltage valid signal. The close permission signal input relay is connected to a close permission external interface for receiving a close permission signal of the high-speed circuit breaker. The hold signal input relay is connected to a hold signal external interface and is configured to receive a hold signal of the high-speed circuit breaker. The high-speed circuit breaker close enable relay is connected to a normally-open contact of the close permission signal input relay, and a normally-open contact of the close permission signal input relay is connected to a normally-open contact of the close high-speed circuit breaker signal input relay, thus the high-speed circuit breaker close enable relay is controlled by connecting the two contacts in series. The protection delay relay is connected to a normally-closed contact of the KIC high-voltage signal input relay, and the normally-closed contact of the KIC high-voltage signal input relay is connected to a normally-open contact of a high-speed circuit breaker closing contactor, thus the protection delay relay is controlled by connecting the two contacts in series. The high-speed circuit breaker closing contactor is connected to a normally-closed contact of the protection delay relay, and the normally-closed contact of the protection delay relay is connected to a normally-open contact of the close permission signal input relay, thus the normally-open contact of the signal input relay is connected in parallel with the normally-open contact of the high-speed circuit breaker close enable relay, and is connected with the normally-open contact of the close permission signal input relay. Thus the high-speed circuit breaker is controlled by connecting the four contacts in series and parallel.

The closing of the high-speed circuit breaker is realized by exchanging a control command through the external interface circuit of the high-speed circuit breaker unit and the external interface circuit of the traction converter unit. The internal circuit of the high-speed circuit breaker simulation unit transmits a valid high-voltage signal of the pantograph and a normal signal of the high-speed circuit breaker to the traction converter simulation unit. After the traction converter simulation unit performs the equipment self-check, to determine whether the following conditions are satisfied: traction self-check being normal, the traction command being valid, the running direction command being valid, the high-voltage electricity being valid, and the high-speed circuit breaker simulation unit being normal. If all the above conditions are satisfied, the traction converter simulation unit outputs a high-speed circuit breaker close command to the high-speed circuit breaker simulation unit, and the high-speed circuit breaker is closed. After the high-speed circuit breaker is closed, the traction converter simulation unit receives a high-voltage electrical signal, and issues a high-speed circuit breaker closing hold command, and the high-speed circuit breaker remains closed. When the following situations occur, the high-speed circuit breaker is disconnected:
1. the traction converter disconnects the high-speed circuit breaker closing hold command;
2. the high-speed circuit breaker control circuit outputs a high-speed circuit breaker disconnecting command, which is active at a low level;
3. a "KIC high voltage" command of a traction inverter unit is at a low level; and
4. a power supply circuit breaker of the high-speed circuit breaker is disconnected.

In practice, a pantograph of a switchboard in each execution device is connected to a high-speed circuit breaker simulation unit of the switchboard (the high-speed circuit breaker simulation unit includes an internal circuit of the high-speed circuit breaker unit and an external interface circuit). The high-speed circuit breaker simulation unit of each switchboard is connected to an external interface circuit of a traction converter unit of the switchboard. An internal circuit of the traction converter unit of each switchboard is connected to an external interface circuit of the traction converter unit of the switchboard. The external interface circuit of the traction converter unit of each switchboard is connected to a traction motor actuator of the switchboard.

Two processor simulation units and internal circuits of traction converter units of three switchboards are connected by network cables, and the ATP zero-speed delay control circuit is connected to the driver controller traction control simulation circuit.

The high-speed circuit breaker control simulation circuit disconnects a control circuit of a high-speed circuit breaker main contactor of the high-speed circuit breaker simulation unit of the execution device through a control line in the control line set. The high-speed circuit breaker simulation unit can control the traction converter simulation unit to receive the high-voltage electrical signal connected by the pantograph. The closing of the main contactor of the high-speed circuit breaker is realized by exchanging a control command through the external interface circuit of the high-speed circuit breaker unit and the external interface circuit of the traction converter unit. The internal circuit of the high-speed circuit breaker simulation unit transmits a valid high-voltage signal of the pantograph and a normal signal of the high-speed circuit breaker to the traction converter simulation unit. After the traction converter simulation unit performs the equipment self-check, to determine whether the following conditions are satisfied: traction self-check being normal, the traction command being valid, the running direction command being valid, the high-voltage electricity being valid, and the high-speed circuit breaker simulation unit being normal. If all the above conditions are satisfied, the traction converter simulation unit outputs a high-speed circuit breaker close command to the high-speed circuit breaker simulation unit, and the high-speed circuit breaker is closed. After the high-speed circuit breaker is closed, the traction converter simulation unit receives a high-voltage electrical signal, and issues a high-speed circuit breaker closing hold command, and the high-speed circuit breaker remains closed. When the following situations occur, the high-speed circuit breaker is disconnected:
1. the traction converter disconnects the high-speed circuit breaker closing hold command;
2. the high-speed circuit breaker control circuit outputs a high-speed circuit breaker disconnecting command, which is active at a low level;
3. a "KIC high voltage" command of a traction inverter unit is at a low level; and
4. an air circuit breaker of the high-speed circuit breaker is disconnected.

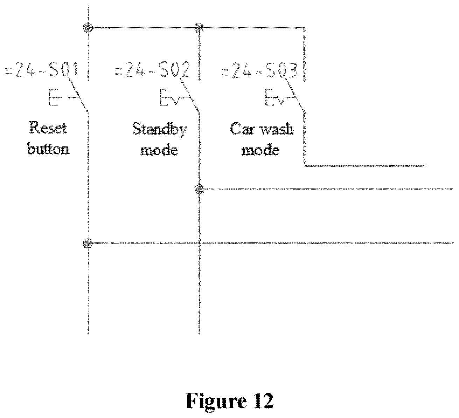

Figure 12 shows a traction converter control simulation circuit. An instantaneous button "=24-S01" is a traction converter reset button, a traction converter simulation unit that has an alarm or failure may reset and restart by pressing it. A standby mode switch "=24-S02", and when it is closed, the traction converter simulation unit enters a standby mode, with the maximum speed to 40 kilometers per hour. The traction converter simulation unit only receives two signals of 50% and 100% of the handle. "=24-S03" is a car wash mode switch, and when it is closed, the traction converter simulation unit enters a car wash mode. As long as the simulated handle is in the traction sector, the simulation traction unit controls the traction motor to run at 3km/h.

The train line includes: a traction safety control line, a traction control line, a traction and brake control line, a running direction and high-speed circuit breaker control line. The traction safety control line is connected to the traction safety loop simulation circuit; the traction control line is connected to the driver controller traction control simulation circuit; the traction and brake control line is connected to the running direction and traction and brake control simulation circuit; the running direction and high-speed circuit breaker control line is respectively connected to the running direction and traction and brake control simulation circuit and the high-speed circuit breaker control simulation circuit.

Specifically, the traction control line is respectively connected to external interface circuits of traction converter units of three switchboards. The traction and brake control line is respectively connected to external interface circuits of traction converter units of three switchboards. The running direction and high-speed circuit breaker control line is respectively connected to external interface circuits of traction converter units of three switchboards, and the running direction and high-speed circuit breaker control line is also respectively connected to internal circuits and external interface circuits of high-speed circuit breaker units of three switchboards. The traction safety control line is respectively connected to external interface circuits of traction converter units of three switchboards.

Two processor simulation units and internal circuits of traction converter units of three switchboards are connected by network cables, and a control status of a logic control PLC of the internal circuit of the traction converter unit and a monitoring status are transmitted to the processor simulation unit through the network cables, and are displayed on a display simulation unit. The ATP zero-speed delay control circuit is connected to the traction control simulation circuit of the driver controller. The ATP zero-speed delay control circuit is used as a condition for the establishment of the traction control simulation circuit of the driver controller. Two driver controller traction control simulation circuits are connected to the traction control line to establish a complete output circuit of the traction command. The traction control line is respectively connected to external interface circuits of traction converter units of three switchboards, thus the traction commands are sent to the external interface circuits of the three traction converter units respectively. Two running direction and traction brake control simulation circuits are connected to the traction and brake control line, thus a complete output circuit for traction commands and brake commands is established. The traction and brake control line is respectively connected to external interface circuits of traction converter units of three switchboards, thus the traction commands and brake commands are respectively sent to the external interface circuits of the three traction converter units. The two running direction and traction brake control simulation circuits are connected to the running direction and the high-speed circuit breaker control line, thus a complete output circuit for the running direction is established. The two high-speed circuit breaker control simulation circuits are connected to the running direction and the high-speed circuit breaker control line, thus a control circuit for high-speed circuit breaker control commands is established. The running direction and high-speed circuit breaker control line is respectively connected to external interface circuits of traction converter units of three switchboards, thus running direction commands are respectively sent to the external interface circuits of the three traction converter units. The running direction and high-speed circuit breaker control line is also respectively connected to internal circuits and external interface circuits of high-speed circuit breaker units of three switchboards, thus high-speed circuit breaker control commands are respectively sent to the internal circuits and external interface circuits of the three high-speed circuit breaker simulation units. Two traction safety loop simulation circuits are connected to the traction safety loop simulation circuit and the traction safety command train line in the traction safety control line, to establish a complete traction safety loop circuit. The traction safety control line is respectively connected to external interface circuits of traction converter units of three switchboards, thus commands for establishing the traction safety loop are respectively sent to the external interface circuits of the three traction converter units.

In the above hardware, a pantograph of a switchboard in each execution device is connected to an internal circuit and an external interface circuit of the high-speed circuit breaker unit, thus a high-voltage valid signal and a high-voltage invalid signal of the pantograph are transmitted to the internal circuit and the external interface circuit of the high-speed circuit breaker simulation unit. The high-speed circuit breaker simulation unit of each switchboard is connected to an external interface circuit of a traction converter unit of the switchboard, thus the external interface circuit of the traction converter unit can monitor the status of an internal function of the high-speed circuit breaker and control the high-speed circuit breaker to realize functions thereof. An internal circuit of the traction converter unit of each switchboard is connected to an external interface circuit of the traction converter unit of the switchboard, thus the external interface circuit of the traction converter unit can transmit an external control command and monitored information to the internal circuit of the traction converter unit, and the internal circuit of the traction converter unit can send its own control state and logic control command to the external interface circuit of the traction converter unit. The external interface circuit of the traction converter unit of each switchboard is connected to a traction motor actuator of the switchboard, thus the external interface circuit of the traction converter unit can drive a traction motor of a traction motor execution simulation unit to run, and monitor a speed sensor of the traction motor execution simulation unit to performs speed closed-loop control.

The hardware structure of the traction control simulation system is introduced above. A logic controller of the traction control simulation system performs logic control according to the following procedure. At the beginning of a main program, self-check is performed by the main program first to check whether the program is normal and whether the basic hardware is faulty. After the self-check, it is determined whether a high speed circuit breaker (HSCB) high-voltage signal is valid or not, the HSCB is re-detected if it the high-voltage signal is invalid, and the HSCB is closed if the high-voltage signal is valid. After closing the HSCB, it is determined whether the traction control simulation system receives a valid high-voltage signal; and the HSCB is disconnected and self-check of the main traction program is performed again if the valid high-voltage signal is not received. If the valid high-voltage signal is received, a pre-charge contactor of the traction main circuit is closed, and whether the intermediate voltage is established is checked. A main contactor is closed if the intermediate voltage is established. After the main contactor is closed, traction conditions are determined. The traction loop needs to be established, the traction enable is established, and the running direction command is valid, then a traction mode is entered. In the traction mode, the traction control simulation system selects an operating condition according to a position command of the driver controller. If the driver controller is in a traction position, the traction force is output according to a traction command ratio of a driver control handle; if the driver controller is in an idle travel position, the traction force is not output; if the driver controller is in a braking position, and it is judged according to a vehicle speed. When the vehicle speed is less than 8km/h, no electric braking force is output. When the vehicle speed is greater than 8km/h, the electric braking force is output according to the position of the driver controller.

In this embodiment, the traction control simulation system for a rail vehicle includes a control line set, two main control devices and at least one execution device, which conforms to the layout of a traction control device of a master vehicle and a traction execution equipment of an executive vehicle in the rail vehicle. In the present disclosure, the two main control device transmit a vehicle control command to an execution device through a control line in the control line set, to control the execution device to execute an operation corresponding to the vehicle control command, which conforms to the way of controlling the traction execution equipment of the executive vehicle by the traction control device of the master vehicle in the rail vehicle. The difference between the traction control simulation system of the present disclosure and a traction control system of an real rail vehicle is small, that is, a simulation degree of the traction control simulation system of the present disclosure is relatively high, and thus the traction control simulation system of the present disclosure can be used to replace the traction control system of the real rail vehicle during debugging and training. Since the traction control simulation system of the present disclosure exists independently, the operation safety is higher, and the running stability and the safety of the real rail vehicle are not affected. In addition, the traction control system of the real rail vehicle is not used for training, and the traction control simulation system of the present disclosure can be used for multiple trainings, thereby saving costs.

The traction control simulation system provided in this embodiment is used to simulate urban subways and light rail vehicles. All components are made of non-loading originals, and the cost is extremely low, which solves domestic technical problems. The traction control simulation system has advantages of strong pertinence, high degree of simulation, low cost, and low operating cost. Each module thereof has complete functions, which can be implemented individually or connected to another vehicle control and monitoring system (TCMS), to achieve networked information, thereby embodying the technical content of urban rail vehicles and the unique technology and skill characteristics of vehicle assembly and dispatching.

In this embodiment, back-end support and front-end functional hardware are organically integrated through logical connection and network connection of the above-mentioned hardware. The arrangement of the execution device and the two main control devices conforms to the layout of the main control vehicle and the execution vehicle of the urban railway vehicle. The arrangement of the three identical traction system components of the executive device reflects the centralized and unified control of the traction system of the urban railway vehicle and the independent control of the single vehicle. That is, the main control vehicle controls traction function signal commands of the whole train, the single vehicle receives the main control command, and the single vehicle controls the traction actuator of the single vehicle to realize the traction function. The main functions of the traction control system of the urban railway vehicle are embodied. Unique debugging skills of the urban railway vehicle are also embodied. The degree of simulation is high. The interfaces and wiring logic of all components are arranged in accordance with a real urban railway vehicle. The trainer can write the debugging method of the training device according to the debugging content of the urban railway vehicle, so that the trainees can carry out standardized operations according to the debugging method, thus the training efficiency is high and the cost is low. Compared with the training using a real vehicle, the training by using small and compact three units to simulate the traction system function of the urban railway vehicle has following advantages. The walking range is small due to centralized parts, which saves personnel walking time, and the impact of the function and performance of training on real vehicles is reduced. Unexpected quality problems are avoided and losses are reduced. In addition, through the traction control simulation system in this embodiment, the trainee can understand the vehicle structure and working principle, and quickly learn vehicle data.

On the basis of the above traction control simulation system for a rail vehicle, a traction control method is provided in another embodiment of the present disclosure, which is applied to the two main control devices in a control state in the above-mentioned traction control simulation system, and the traction control method includes: sequentially receiving multiple control commands input by an user in chronological order and outputting each of the multiple control commands to each execution device through a corresponding control line in the control line set; determining, by each execution device, whether each of the multiple control commands is a valid control command in turn; and executing an operation corresponding to the valid control command in case of determining that each of the multiple control commands is the valid control command.

In an embodiment, the sequentially receiving multiple control commands input by an user in chronological order and outputting each of the multiple control commands to each execution device through a corresponding control line in the control line set includes:
receiving a current control command input by the user;
outputting the current control command to each execution device through a control line corresponding to the current control command;
receiving a next control command input by the user in a case that the current control command is executed by a target execution device controlled by the current control command successfully; and
updating the next control command to the current control command, executing again the step of outputting the current control command to each execution device through a control line corresponding to the current control command in sequence, until all control commands input by the user are received.

Specifically, in practice, an execution process of the traction control method is as follows.

### 1. Circuit inspection.

On a switchboard 1 of an execution device, use a multi-meter to measure an upper port voltage of circuit breakers 25-F02, 25-F03, and 25-F04 respectively, and determine whether a lower port of the circuit breakers 25-F02, 25-F03, and 25-F04 is short-circuited to a load respectively. The upper port voltage is DC110V, and the lower port is not short-circuited to line 32100. Close the circuit breaker 25-F02 and confirm that there is a direct-current voltage DC110V between a port CF1-13 and ports CF1-37, 38, 49 on an interface terminal block of a traction converter. Close the circuit breaker 25-F03, and confirm that there is a direct-current DC110V between a port CF1-14 and ports CF1-37, 38, 49 on the interface terminal block of the traction converter. Close the circuit breaker 25-F04 and confirm that there is a direct-current DC110V between a port CF1-10 and ports CF1-37, 38, 49 on the interface terminal block of the traction converter.

On a switchboard 2 of the execution device, use a multi-meter to measure an upper port voltage of circuit breakers 25-F02, 25-F03, and 25-F04 respectively, and determine whether a lower port of the circuit breakers 25-F02, 25-F03, and 25-F04 is short-circuited to a load respectively. The upper port voltage is DC110V, and the lower port is not short-circuited to line 32100. Close the circuit breaker 25-F02 and confirm that there is a direct-current voltage DC110V between a port CF1-13 and ports CF1-37, 38, 49 on an interface terminal block of a traction converter. Close the circuit breaker 25-F03, and confirm that there is a direct-current DC110V between a port CF1-14 and ports CF1-37, 38, 49 on the interface terminal block of the traction converter. Close the circuit breaker 25-F04 and confirm that there is a direct-current DC110V between a port CF1-10 and ports CF1-37, 38, 49 on the interface terminal block of the traction converter.

On a switchboard 3 of the execution device, use a multi-meter to measure an upper port voltage of circuit breakers 25-F02, 25-F03, and 25-F04 respectively, and determine whether a lower port of the circuit breakers 25-F02, 25-F03, and 25-F04 is short-circuited to a load respectively. The upper port voltage is DC110V, and the lower port is not short-circuited to line 32100. Close the circuit breaker 25-F02 and confirm that there is a direct-current voltage DC110V between a port CF1-13 and ports CF1-37, 38, 49 on an interface terminal block of a traction converter. Close the circuit breaker 25-F03, and confirm that there is a direct-current DC110V between a port CF1-14 and ports CF1-37, 38, 49 on the interface terminal block of the traction converter. Close the circuit breaker 25-F04 and confirm that there is a direct-current DC110V between a port CF1-10 and ports CF1-37, 38, 49 on the interface terminal block of the traction converter.

### 2. Check an interface signal of a traction converter simulation unit.

### 2.1. Operate on a main control device 101.

2.1.1. Activate a driver controller key, and confirm and check that head relays =21-K01, =21-K02, =21-K03, =21-K04, =21-K05, =21-K06, =21-K07, =21-K08, =21-K09, =21-K10, =21-K12, and =21-K11 are closed.

2.1.2. Operate a running direction switch, turn it to a "forward" position, confirm that a relay =24-K05 is energized, and confirm that there is a direct-current voltage DC110V between a port CF1-46 and a port CF1-37 on three interface terminal blocks of the traction converter of the execution device.

2.1.3. Operate a running direction switch, turn it to a "backward" position, and confirm that that there is a direct-current voltage DC110V between a port CF1-6 and the port CF1-37 on the three interface terminal blocks of the traction converter of the execution device.

2.1.4. Operate a driver controller handle, push it to a "traction" section, and confirm that there is a direct-current voltage DC110V between a port CF1-53 and the port CF1-37 on the three interface terminal blocks of the traction converter of the execution device.

2.1.5. Operate the driver controller handle, push it to a "brake" section, and confirm that there is a direct-current voltage DC110V between a port CF1-40 and the port CF1-37 on the three interface terminal blocks of the traction converter of the execution device.

2.1.6. Establish a traction safety loop, turn a door selecting switch =81-S02 to a "0" position; turn an ATP cut switch to a "cut" position, and the relay 41-K11 will be energized; close left and right doors, the relays =81-K01 and =81-K03 are energized, if the door cannot be closed in place, operate a door close bypass switch =81-S03; operate the driver controller handle to a "maximum service brake" position, press a "Alert" button to confirm the establishment of an emergency brake loop, the relay =26-K07 is energized, and the brake service is relieved; operate a "parking brake start/relief" switch, the parking brake is relieved, the relay =26-K09 is powered. At this time, the through line of a traction safety loop train line is energized, and the traction safety loop train line is output and powered through a normally-closed contact of a head relay =21-K08 of a tail car. Confirm that a traction safety command box is green on a human machine interface (HMI); confirm that there is direct-current voltage DC110V between a port CF1-42 and the port CF1-37 on the three interface terminal blocks of the traction converter of the execution device.

2.1.7. Operate a traction converter reset button =24-S01, and confirm that there is a direct-current voltage DC110V between a port CF1-66 and the port CF1-37 on the three interface terminal blocks of the traction converter of the execution device.

2.1.8. Operate a standby mode switch =24-S02, confirm that there is a direct-current voltage DC110V between a port CF1-67 and the port CF1-37 on the three interface terminal blocks of the traction converter of the execution device.

2.1.9. Operate a car wash mode switch =24-S03, and confirm that there is a direct-current voltage DC110V between a port CF1-68 and the port CF1-37 on the three interface terminal blocks of the traction converter of the execution device.

### 2.2. Operate on a main control device 102.

2.2.1. Activate a driver controller key, and confirm and check that head relays =21-K01, =21-K02, =21-K03, =21-K04, =21-K05, =21-K06, =21-K07, =21-K08, =21-K09, =21-K10, =21-K12, and =21-K11 are closed.

2.2.2. Operate a running direction switch, turn it to a "forward" position, confirm that a relay =24-K05 is energized, and confirm that there is a direct-current voltage DC110V between a port CF1-46 and a port CF1-37 on three interface terminal blocks of the traction converter of the execution device.

2.2.3. Operate a running direction switch, turn it to a "backward" position, and confirm that that there is a direct-current voltage DC110V between a port CF1-6 and the port CF1-37 on the three interface terminal blocks of the traction converter of the execution device.

2.2.4. Operate a driver controller handle, push it to a "traction" section, and confirm that there is a direct-current voltage DC110V between a port CF1-53 and the port CF1-37 on the three interface terminal blocks of the traction converter of the execution device.

2.2.5. Operate the driver controller handle, push it to a "brake" section, and confirm that there is a direct-current voltage DC110V between a port CF1-40 and the port CF1-37 on the three interface terminal blocks of the traction converter of the execution device.

2.2.6. Establish a traction safety loop, turn a door selecting switch =81-S02 to a "0" position; turn an ATP cut switch to a "cut" position, and the relay 41-K11 will be energized; close left and right doors, the relays =81-K01 and =81-K03 are energized, if the door cannot be closed in place, operate a door close bypass switch =81-S03; operate the driver controller handle to a "maximum service brake" position, press a "Alert" button to confirm the establishment of an emergency brake loop, the relay =26-K07 is energized, and the brake service is relieved; operate a "parking brake start/relief" switch, the parking brake is relieved, the relay =26-K09 is powered. At this time, the through line of a traction safety loop train line is energized, and the traction safety loop train line is output and powered through a normally-closed contact of a head relay =21-K08 of a tail car. Confirm that a traction safety command box is green on a HMI; confirm that there is direct-current voltage DC110V between a port CF1-42 and the port CF1-37 on the three interface terminal blocks of the traction converter of the execution device.

2.2.7. Operate a traction converter reset button =24-S01, and confirm that there is a direct-current voltage DC110V between a port CF1-66 and the port CF1-37 on the three interface terminal blocks of the traction converter of the execution device.

2.2.8. Operate a standby mode switch =24-S02, confirm that there is a direct-current voltage DC110V between a port CF1-67 and the port CF1-37 on the three interface terminal blocks of the traction converter of the execution device.

2.2.9. Operate a car wash mode switch =24-S03, and confirm that there is a direct-current voltage DC110V between a port CF1-68 and the port CF1-37 on the three interface terminal blocks of the traction converter of the execution device.

### 3. Electric Multiple Units (EMU) test.

### 3.1. Operate on a main control device 101.

3.1.1 Operate a driver controller key of the main control device 101, activate a driver's cab, and confirm and check that head relays 21-K01, 21-K02, 21-K03, 21-K04, 21-K05, 21-K06, 21-K07, 21-K08, 21-K09, 21-K10, 21-K12, and 21-K11 are closed, and confirm that the driver's cab of the main control device 101 has been activated on the HMI.

3.2. Raise a pantograph, and confirm that a simulated voltage value of the train displayed on the HMI is DC1500V.

3.3. Operate the driver controller handle to establish an emergency braking loop, relief a parking brake, and establish a traction safety loop.

3.4. Operate the driver controller handle to an "idle" position, confirm on the HMI that the service brake is relieved, and keep the brake not relieved. A brake pressure value of an operation interface of the HMI is "1.1".

3.5. Operate the driver controller handle to a "minimum traction" position, confirm on the HMI that a KIC on a traction interface is closed, a KCCC is disconnected, a high-speed circuit breaker is closed, traction current and traction force are displayed numerically, and a braking pressure value on the operation interface is "0". Confirm that a traction motor runs smoothly, and confirm that a rotation direction of the traction motor is the same as the running direction.

3.6. Push the driver controller handle from a traction zone "P1" to a traction zone "P4" once, confirm on the HMI that the traction current and traction force on the traction interface are gradually increasing, and confirm that a speed of the traction motor is gradually increasing; push the driver controller handle from the traction zone "P4" to the traction zone "P1" once, confirm on the HMI that the traction current and traction force on the traction interface are gradually reduced, and confirm that the speed of the traction motor is gradually reduced.

3.7. Push the driver controller handle from the traction zone to the "idle" position, and confirm on the HMI that the traction current and traction force on the traction interface are "0", and confirm that the traction motor has no excitation and runs by inertia.

3.8. Push the driver controller handle from the "idle" position to a "braking" zone, and confirm on the HMI that the traction current and traction force on the traction interface are "0", and confirm that the traction motor has no traction and is decelerated and stopped by the braking system.

It should be noted that each step of a manual operation in this embodiment will generate a current control command, and a result of the current control command will be displayed on the display simulation unit. And the result displayed on the display simulation unit is used to determine whether the current control command is executed successfully. After the current control command is executed successfully, a next step is manually executed and the above process is repeated.

In addition to the above-mentioned manual training process, the simulation device in the present disclosure may also be faulted by activating a fault setting relay, resulting in a lack of function, thereby enabling personnel to input a fault code through a clicker after analysis and measurement, and determining whether the answer is correct by comparing the fault code with the database, that is, the training of fault identification may also be realized by the simulation device in the present disclosure.

In this embodiment, the process of applying the traction control simulation system is illustrated, such that employee training can be realized.

Based on the above description of the disclosed embodiments, those skilled in the art are capable of carrying out or using the present disclosure. It is obvious for those skilled in the art to make many modifications to these embodiments. The general principle defined herein may be applied to other embodiments without departing from the scope of the present disclosure. Therefore, the present disclosure is not limited to the embodiments illustrated herein, but should be defined by the broadest scope consistent with the principle and novel features disclosed herein.

## Claims

1. A traction control simulation system for a rail vehicle, comprising: a control line set (301), two main control devices (101, 102) and at least one execution device (201-20n), wherein:
the two main control devices (101, 102) and the execution device (201-20n) are connected to the control line set (301);
the two main control devices (101, 102) are configured to implement a traction control function and a traction monitoring function of a traction control device on the rail vehicle, and only one main control device of the two main control devices (101, 102) is in a control state at the same time;
a control line in the control line set (301) is configured to implement a data transmission function of a train line on the rail vehicle;
the execution device (201-20n) is configured to implement an operation execution function of a traction execution equipment on the rail vehicle; and
the two main control devices (101, 102) are further configured to: transmit a vehicle control command to the execution device (201-20n) through the control line in the control line set (301), and to control the execution device (201-20n) to perform an operation corresponding to the vehicle control command.

2. The traction control simulation system according to claim 1, wherein the two main control devices (101, 102) each comprises: a display simulation unit, a processor simulation unit, a driver controller traction control simulation circuit, a running direction and traction brake control simulation circuit, a high-speed circuit breaker control simulation circuit, a traction safety loop simulation circuit, an automatic train protection, ATP, zero-speed delay control simulation circuit, and a traction converter control simulation circuit;
wherein the display simulation unit, the driver controller traction control simulation circuit, the running direction and traction brake control simulation circuit, and the traction converter control simulation circuit are connected to the processor simulation unit; the ATP zero-speed delay control simulation circuit is connected to the driver controller traction control simulation circuit; the traction safety loop simulation circuit, the high-speed circuit breaker control simulation circuit, the running direction and traction brake control simulation circuit, and the driver controller traction control simulation circuit are connected to the control line set (301); and the traction converter control simulation circuit and the processor simulation unit are both connected to the execution device (201-20n);
wherein the display simulation unit is configured to display data to be displayed sent by the processor simulation unit;
wherein the driver controller traction control simulation circuit is configured to generate and output a driver controller traction command;
wherein the running direction and traction brake control simulation circuit is configured to generate and output a running direction control command and a traction brake command;
wherein the high-speed circuit breaker control simulation circuit is configured to generate and output a high-speed circuit breaker control command;
wherein the traction safety loop simulation circuit is configured to generate and output a traction safety loop control command;
wherein the ATP zero-speed delay control simulation circuit is configured to establish a traction safety loop;
wherein the traction converter control simulation circuit is configured to generate and output a traction converter control command; and
wherein the processor simulation unit is configured to: receive commands from the driver controller traction control simulation circuit, the running direction and traction brake control simulation circuit, and the traction converter control simulation circuit, and output the commands to the display simulation unit to display.

3. The traction control simulation system according to claim 1, wherein in the traction safety loop simulation circuit, a normally-open contact of a driver's cab activation relay in a control state, a normally-closed contact of a door selecting switch, a normally-open contact of an ATP cutting relay, a normally-open contact of a left door being closed relay, a normally-open contact of a right door being closed relay, a normally-open contact of a brake relief relay, a normally-open contact of an emergency brake relief relay, and a normally-open contact of a parking brake relief relay are connected in series and connected to a traction safety control line in the control line set (301);
wherein the traction safety control line is connected to a normally-closed contact of the driver's cab activation relay in a non-control state, to form a closed traction safety monitoring loop;
wherein a normally-open contact of a door being closed bypass switch is connected in parallel with a circuit comprising the normally-open contact of the left door being closed relay and the normally-open contact of the right door being closed relay connected in series; and
wherein a normally-open contact of an ATP zero-speed relay is connected in parallel with a circuit comprising the normally-open contact of the brake relief relay and the normally-open contact of the emergency brake relief relay connected in series.

4. The traction control simulation system according to claim 2, wherein the number of the execution device (201-20n) is three, and each execution device (201-20n) comprises: a high-speed circuit breaker simulation unit, a traction converter simulation unit and a traction motor execution simulation unit;
wherein the high-speed circuit breaker simulation unit and the processor simulation unit are connected to the traction converter simulation unit, respectively;
wherein the traction converter control simulation circuit is connected to the traction converter simulation unit and the traction motor execution simulation unit, respectively;
wherein the high-speed circuit breaker simulation unit and the traction converter simulation unit are connected to the control line set (301), respectively; and
wherein the high-speed circuit breaker simulation unit obtains electrical energy from a pantograph connected to the high-speed circuit breaker simulation unit.

5. The traction control simulation system according to claim 4, wherein the traction converter simulation unit comprises: a traction converter unit internal circuit and a traction converter unit external interface circuit;
wherein the traction converter unit internal circuit comprises: a logic controller, a frequency converter, a forward command input relay, a backward command input relay, a brake command input relay, a traction command input relay, a traction safety command input relay, a reset command input relay, a standby mode command input relay, a contact net position command input relay, a first working power input relay, a second working power input relay, a high-speed circuit breaker sub-command input relay, a brake status loop command input relay, a high-speed circuit breaker status feedback command input relay, an output relay for outputting a K-line contactor, KIC, high voltage output command, an output relay for outputting a command to allow a high-speed circuit breaker to close, an output relay for outputting a high-speed circuit breaker closing command, an output relay for outputting a high-speed circuit breaker keep-on command, an output relay for outputting a brake status command, an output relay for outputting a standby brake status command, an output relay for outputting a traction status command, and a traction main circuit power supply contactor;
wherein the logic controller comprises a CPU module and an I/O module, the I/O module is connected to the frequency converter, the CPU module is configured to generate a frequency converter control signal, and the I/O module is configured to transmit the frequency converter control signal to the frequency converter;
wherein the forward command input relay, the backward command input relay, the brake command input relay, the traction command input relay, the traction safety command input relay, the reset command input relay, the standby mode command input relay, the contact net position command input relay, the first working power input relay, the second working power input relay, the high-speed circuit breaker sub-command input relay, the brake status loop command input relay, and the high-speed circuit breaker status feedback command input relay are connected to an input port of the logic controller; and
wherein the output relay for outputting the KIC high voltage output command, the output relay for outputting the command to allow the high-speed circuit breaker to close, the output relay for outputting the high-speed circuit breaker closing command, the output relay for outputting the high-speed circuit breaker keep-on command, the output relay for outputting the brake status command, the output relay for outputting the standby brake status command, the output relay for outputting the traction status command, and the traction main circuit power supply contactor are connected to an output port of the logic controller.

6. The traction control simulation system according to claim 4, wherein the high-speed circuit breaker simulation unit comprises: a closed high-speed circuit breaker signal input relay, a K-line contactor, KIC, high-voltage signal input relay, a closing permission signal input relay, a holding signal input relay, a high-speed circuit breaker closing contactor, and a high-speed circuit breaker closing enabling relay, and a protection delay relay;
wherein the closed high-speed circuit breaker signal input relay is connected to an external interface of a closed high-speed circuit breaker, and is configured to receive a signal to close the high-speed circuit breaker;
wherein the KIC high-voltage signal input relay is connected to a KIC high-voltage external interface, and is configured to receive a KIC high-voltage effective signal;
wherein the closing permission signal input relay is connected to a closing permission external interface, and is configured to receive a closing permission signal of the high-speed circuit breaker;
wherein the holding signal input relay is connected to a holding signal external interface, and is configured to receive a holding signal of the high-speed circuit breaker;
wherein the high-speed circuit breaker closing enabling relay is connected to a normally-open contact of the closing permission signal input relay, and the normally-open contact of the closing permission signal input relay is connected in series with a normally-open contact of the closed high-speed circuit breaker signal input relay, so as to control an action of the high-speed circuit breaker closing enabling relay through two sets of contacts connected in series;
wherein the protection delay relay is connected to a normally-closed contact of the KIC high-voltage signal input relay, and the normally-closed contact of the KIC high-voltage signal input relay is connected in series with a normally-open contact of the high-speed circuit breaker closing contactor, so as to control an action of the protection delay relay through two sets of contacts connected in series; and
wherein the high-speed circuit breaker closing contactor is connected to a normally-closed contact of the protection delay relay, the normally-closed contact of the protection delay relay is connected to the normally-open contact of the closing permission signal input relay, a normally-open contact of a signal input relay is connected in parallel with the normally-open contact of the high-speed circuit breaker closing enabling relay, and is connected with the normally-open contact of the closing permission signal input relay, so as to control an action of the high-speed circuit breaker closing contactor through four sets of contacts connected in series and parallel.

7. The traction control simulation system according to claim 1, wherein the train line comprises: a traction safety control line, a traction control line, a traction and brake control line, a running direction and high-speed circuit breaker control line; and
wherein the traction safety control line is connected to the traction safety loop simulation circuit, the traction control line is connected to the driver controller traction control simulation circuit, the traction and brake control line is connected to the running direction and traction and brake control simulation circuit, and the running direction and high-speed circuit breaker control line is connected to the running direction and traction and brake control simulation circuit and the high-speed circuit breaker control simulation circuit, respectively.

8. A traction control method, applied to the main control device of the two main control devices (101, 102) in the control state in the traction control simulation system according to claim 1, wherein the traction control method comprises:
receiving a plurality of control commands input by an user sequentially in chronological order and outputting each of the plurality of control commands received to each execution device (201-20n) through a corresponding control line in the control line set (301);
determining, by each execution device (201-20n), whether each of the plurality of control commands is a valid control command in turn; and
executing an operation corresponding to the valid control command in case of determining that a control command is the valid control command.

9. The traction control method according to claim 8, wherein the receiving the plurality of control commands input by the user sequentially in chronological order and outputting each of the plurality of control commands to each execution device (201-20n) through the corresponding control line in the control line set (301) comprises:
receiving a current control command input by the user;
outputting the current control command to each execution device (201-20n) through a control line corresponding to the current control command;
receiving a next control command input by the user in a case that the current control command is executed by a target execution device (201-20n) controlled by the current control command successfully; and
updating the next control command to the current control command, executing again the step of outputting the current control command to each execution device (201-20n) through a control line corresponding to the current control command in sequence, until all control commands input by the user are received.

## Patentansprüche

1. Traktionssteuersimulationssystem für ein Schienenfahrzeug, umfassend:
einen Steuerleitungssatz (301), zwei Hauptsteuervorrichtungen (101, 102) und zumindest eine Ausführungsvorrichtung (201-20n), wobei:
die zwei Hauptsteuervorrichtungen (101, 102) und die Ausführungsvorrichtung (201-20n) mit dem Steuerleitungssatz (301) verbunden sind;
die zwei Hauptsteuervorrichtungen (101, 102) dazu konfiguriert sind, eine Traktionssteuerfunktion und eine Traktionsüberwachungsfunktion einer Traktionssteuervorrichtung an dem Schienenfahrzeug umzusetzen, wobei sich jeweils nur eine Hauptsteuervorrichtung der zwei Hauptsteuervorrichtungen (101, 102) in einem Steuerzustand befindet;
eine Steuerleitung in dem Steuerleitungssatz (301) dazu konfiguriert ist, eine Datenübertragungsfunktion einer Zugleitung auf dem Schienenfahrzeug zu implementieren;
die Ausführungsvorrichtung (201-20n) dazu konfiguriert ist, eine Betriebsausführungsfunktion einer Traktionsausführungseinrichtung auf dem Schienenfahrzeug umzusetzen; und
die zwei Hauptsteuervorrichtungen (101, 102) ferner dazu konfiguriert sind: einen Fahrzeugsteuerbefehl über die Steuerleitung im Steuerleitungssatz (301) an die Ausführungsvorrichtung (201-20n) zu übertragen, und die Ausführungsvorrichtung (201-20n) dahingehend zu steuern, einen Vorgang auszuführen, der dem Fahrzeugsteuerbefehl entspricht.

2. Traktionssteuersimulationssystem nach Anspruch 1, wobei die zwei Hauptsteuervorrichtungen (101, 102) jeweils aufweisen: eine Anzeigesimulationseinheit, eine Prozessorsimulationseinheit, eine Traktionssteuersimulationsschaltung der Fahrersteuerung, eine für die Fahrtrichtungs- und Traktionsbremssteuersimulationsschaltung, eine Hochgeschwindigkeitsleistungsschaltersteuersimulationsschaltung, eine Traktionssicherheitsschleifensimulationsschaltung, eine Nullgeschwindigkeitsverzögerungssimulationsschaltung für den automatischen Zugschutz (automatic train protection, ATP) und eine Traktionskonvertersteuersimulationsschaltung;
wobei die Anzeigesimulationseinheit, die Traktionssteuersimulationsschaltung der Fahrersteuerung, die Fahrtrichtungs- und Traktionsbremssteuersimulationsschaltung und die Traktionskonvertersteuersimulationsschaltung mit der Prozessorsimulationseinheit verbunden sind; die ATP-Nullgeschwindigkeitsverzögerungssimulationsschaltung mit der Traktionssteuersimulationsschaltung der Fahrersteuerung verbunden ist; die Traktionssicherheitsschleifensimulationsschaltung, die Hochgeschwindigkeitsleistungsschaltersteuersimulationsschaltung, die Fahrtrichtungs- und Traktionsbremssteuersimulationsschaltung der Fahrersteuerung und die Traktionssteuersimulationsschaltung der Fahrersteuerung mit dem Steuerleitungssatz (301) verbunden sind; und die Traktionskonvertersteuersimulationsschaltung und die Prozessorsimulationseinheit jeweils mit der Ausführungsvorrichtung (201-20n) verbunden sind;
wobei die Anzeigesimulationseinheit dazu konfiguriert ist, von der Prozessorsimulationseinheit gesendete anzuzeigende Daten anzuzeigen;
wobei die Traktionssteuersimulationsschaltung der Fahrersteuerung dazu konfiguriert ist, einen Traktionsbefehl der Fahrersteuerung zu erzeugen und auszugeben;
wobei die Fahrtrichtungs- und Traktionsbremssteuersimulationsschaltung dazu konfiguriert ist, einen Laufrichtungssteuerungsbefehl und einen Traktionsbremsenbefehl zu erzeugen und auszugeben;
wobei die Hochgeschwindigkeitsleistungsschaltersteuersimulationsschaltung dazu konfiguriert ist, einen Steuerbefehl für einen Hochgeschwindigkeitsleistungsschalter zu erzeugen und auszugeben;
wobei die Traktionssicherheitsschleifensimulationsschaltung dazu konfiguriert ist, einen Traktionssicherheitsschleifensteuerbefehl zu erzeugen und auszugeben;
wobei die ATP-Nullgeschwindigkeitsverzögerungssimulationsschaltung dazu konfiguriert ist, eine Traktionssicherheitsschleife einzurichten;
wobei die Traktionskonvertersteuersimulationsschaltung dazu konfiguriert ist, einen Traktionskonvertersteuerbefehl zu erzeugen und auszugeben; und
wobei die Prozessorsimulationseinheit dazu konfiguriert ist, Befehle von der Traktionssteuersimulationsschaltung der Fahrersteuerung, der Fahrtrichtungs- und Traktionsremssteuersimulationsschaltung und der Traktionskonvertersteuersimulationsschaltung zu empfangen und die Befehle zur Anzeige an die Anzeigesimulationseinheit auszugeben.

3. Traktionssteuersimulationssystem nach Anspruch 1, wobei in der Traktionssicherheitsschleifensimulationsschaltung ein normalerweise offener Kontakt eines Fahrerkabinenaktivierungsrelais in einem Steuerzustand, ein normalerweise geschlossener Kontakt eines Türauswahlschalters, ein normalerweise offener Kontakt eines ATP-Unterbrechungsrelais, ein normalerweise offener Kontakt eines Relais für geschlossene linke Tür, ein normalerweise offener Kontakt eines Relais für geschlossene rechte Tür, ein normalerweise offener Kontakt eines Bremsentlastungsrelais, ein normalerweise offener Kontakt eines Notbremsentlastungsrelais und ein normalerweise offener Kontakt eines Feststellbremsentlastungsrelais in Reihe geschaltet und mit einer Traktionssicherheitssteuerleitung in dem Steuerleitungssatz (301) verbunden sind;
wobei die Traktionssicherheitssteuerleitung im Nichtsteuerzustand mit einem normalerweise geschlossenen Kontakt des Fahrerkabinenaktivierungsrelais verbunden ist, um eine geschlossene Traktionssicherheitsüberwachungsschleife auszubilden;
wobei ein normalerweise offener Kontakt eines Bypass-Schalters für geschlossene Türen parallel zu einem Schaltkreis geschaltet ist, der den normalerweise offenen Kontakt des Relais für geschlossene linke Tür und den normalerweise offenen Kontakt des Relais für geschlossene rechte Tür in Reihe umfasst; und
wobei ein normalerweise offener Kontakt eines ATP-Nullgeschwindigkeitsrelais parallel zu einem Schaltkreis geschaltet ist, der den normalerweise offenen Kontakt des Bremsentlastungsrelais und den normalerweise offenen Kontakt des Notbremsentlastungsrelais in Reihe umfasst.

4. Traktionssteuersimulationssystem nach Anspruch 2, wobei die Anzahl der Ausführungsvorrichtungen (201-20n) drei beträgt und jede Ausführungsvorrichtung (201-20n) umfasst: eine Hochgeschwindigkeitsleistungsschaltersimulationseinheit, eine Traktionskonvertersimulationseinheit und eine Traktionsmotorausführungssimulationseinheit;
wobei die Hochgeschwindigkeitsleistungsschaltersimulationseinheit und die Prozessorsimulationseinheit jeweils mit der Traktionskonvertersimulationseinheit verbunden sind;
wobei die Traktionskonvertersteuersimulationsschaltung mit der Traktionskonvertersimulationseinheit bzw. der Traktionsmotorausführungssimulationseinheit verbunden ist;
wobei die Hochgeschwindigkeitsleistungsschaltersimulationseinheit und die Traktionskonvertersimulationseinheit jeweils mit dem Steuerleitungssatz (301) verbunden sind; und
wobei die Hochgeschwindigkeitsleistungsschaltersimulationseinheit elektrische Energie von einem mit der Hochgeschwindigkeitsleistungsschaltersimulationseinheit verbundenen Stromabnehmer bezieht.

5. Traktionssteuersimulationssystem nach Anspruch 4, wobei die Traktionskonvertersimulationseinheit umfasst: einen internen Schaltkreis der Traktionskonvertereinheit und einen externen Schnittstellenschaltkreis der Traktionskonvertereinheit;
wobei der interne Schaltkreis der Traktionskonvertereinheit umfasst: eine Logiksteuerung, einen Frequenzkonverter, ein Vorwärtsbefehleingangsrelais, ein Rückwärtsbefehleingangsrelais, ein Bremsbefehleingangsrelais, ein Traktionsbefehleingangsrelais, ein Traktionssicherheitsbefehleingangsrelais, ein Reset-Befehleingangsrelais, ein Standbymodus-Befehlseingangsrelais, ein Kontaktnetzpositionsbefehleingangsrelais, ein erstes Arbeitsleistungseingangsrelais, ein zweites Arbeitsleistungseingangsrelais, ein Hochgeschwindigkeitsleistungsschalterunterbefehlseingangsrelais, ein Bremsstatusschleifenbefehlseingangsrelais, ein Hochgeschwindigkeitsleistungsschalterstatusrückmeldungsbefehlseingangsrelais, ein Ausgaberelais zum Ausgeben eines K-Leitungsschütz(KIC)-Hochspannungsausgangsbefehl, ein Ausgaberelais zum Ausgeben eines Befehls, um das Schließen eines Hochgeschwindigkeitsleistungsschalters zu ermöglichen, ein Ausgaberelais zum Ausgeben eines Hochgeschwindigkeitsleistungsschalterschließbefehls, ein Ausgaberelais zum Ausgeben eines Hochgeschwindigkeitsschalterhaltebefehls, ein Ausgaberelais zum Ausgeben eines Bremsstatusbefehls, ein Ausgaberelais zum Ausgeben eines Standby-Bremsstatusbefehls, ein Ausgaberelais zum Ausgeben eines Traktionsstatusbefehls und einen Schütz zur Stromversorgung des Traktionshauptstromkreises;
wobei die Logiksteuerung ein CPU-Modul und ein E/A-Modul umfasst, das E/A-Modul mit dem Frequenzkonverter verbunden ist, das CPU-Modul dazu konfiguriert ist, ein Frequenzkonvertersteuersignal zu erzeugen, und das E/A-Modul dazu konfiguriert ist, das Frequenzkonvertersteuersignal an den Frequenzkonverter zu übertragen;
wobei das Vorwärtsbefehleingangsrelais, das Rückwärtsbefehleingangsrelais, das Bremsbefehleingangsrelais, das Traktionsbefehleingangsrelais, das Traktionssicherheitsbefehleingangsrelais, das Reset-Befehleingangsrelais, das Standbymodus-Befehlseingangsrelais, das Kontaktnetzpositionsbefehlseingangsrelais, das erste Arbeitsleistungseingangsrelais, das zweite Arbeitsleistungseingangsrelais, das Hochgeschwindigkeitsleistungsschalterunterbefehlseingangsrelais, das Bremsstatusschleifenbefehlseingangsrelais und das Hochgeschwindigkeitsleistungsschalterstatusrückmeldungsbefehlseingangsrelais mit einem Eingangsanschluss der Logiksteuerung verbunden sind; und
wobei das Ausgaberelais zum Ausgeben des KIC-Hochspannungsausgangsbefehls, das Ausgaberelais zum Ausgeben des Befehls, um das Schließen eines Hochgeschwindigkeitsleistungsschalters zu ermöglichen, das Ausgaberelais zum Ausgeben des Hochgeschwindigkeitsschalterschließbefehls, das Ausgaberelais zum Ausgeben des Hochgeschwindigkeitsschalterhaltebefehls, das Ausgaberelais zum Ausgeben des Bremsstatusbefehls, das Ausgaberelais zum Ausgeben des Standby-Bremsstatusbefehls, das Ausgaberelais zum Ausgeben des Traktionsstatusbefehls und der Schütz der Traktionshauptstromkreisstromversorgung mit einem Ausgangsanschluss der Logiksteuerung verbunden sind.

6. Traktionssteuersimulationssystem nach Anspruch 4, wobei die Hochgeschwindigkeitsleistungsschaltersimulationseinheit umfasst: ein Relais des geschlossenen Hochgeschwindigkeitsleistungsschalters, ein K-Leitungsschütz(KIC)-Hochspannungssignaleingangsrelais, ein Schließerlaubnissignaleingangsrelais, ein Haltesignaleingangsrelais, ein Hochgeschwindigkeitsleistungsschalterschließschütz und ein Hochgeschwindigkeitsleistungsschalterschließfreigaberelais und ein Schutzverzögerungsrelais;
wobei das Signaleingangsrelais des geschlossenen Hochgeschwindigkeitsleistungsschalters mit einer externen Schnittstelle eines geschlossenen Hochgeschwindigkeitsleistungsschalters verbunden ist und dazu konfiguriert ist, ein Signal zum Schließen des Hochgeschwindigkeitsleistungsschalters zu empfangen;
wobei das KIC-Hochspannungssignaleingangsrelais mit einer externen KIC-Hochspannungsschnittstelle verbunden ist und konfiguriert ist zum Empfangen eines KIC-Hochspannungseffektivsignals;
wobei das Schließerlaubnissignaleingangsrelais mit einer externen Schnittstelle für die Schließerlaubnis verbunden ist und dazu konfiguriert ist, ein Schließerlaubnissignal des Hochgeschwindigkeitsleistungsschalters zu empfangen;
wobei das Haltesignaleingangsrelais mit einer externen Haltesignalschnittstelle verbunden ist und dazu konfiguriert ist, ein Haltesignal des Hochgeschwindigkeitsleistungsschalters zu empfangen;
wobei das Hochgeschwindigkeitsleistungsschalterschließfreigaberelais mit einem normalerweise offenen Kontakt des Schließerlaubnissignaleingangsrelais verbunden ist und der normalerweise offene Kontakt des Schließerlaubnissignaleingangsrelais in Reihe mit einem normalerweise offenen Kontakt des geschlossenen Hochgeschwindigkeitsleistungsschalters geschaltet ist, um eine Aktion des Hochgeschwindigkeitsleistungsschalterschließfreigaberelais über zwei in Reihe geschaltete Kontaktsätze zu steuern;
wobei das Schutzverzögerungsrelais mit einem normalerweise geschlossenen Kontakt des KIC-Hochspannungssignaleingangsrelais verbunden ist und der normalerweise geschlossene Kontakt des KIC-Hochspannungssignaleingangsrelais in Reihe mit einem normalerweise offenen Kontakt des Hochgeschwindigkeitsleistungsschalterschließschützes geschaltet ist, um eine Aktion des Schutzverzögerungsrelais durch zwei in Reihe geschaltete Kontaktsätze zu steuern; und
wobei der Hochgeschwindigkeitsleistungsschalterschließschütz mit einem normalerweise geschlossenen Kontakt des Schutzverzögerungsrelais verbunden ist, der normalerweise geschlossene Kontakt des Schutzverzögerungsrelais mit dem normalerweise offenen Kontakt des Schließerlaubnissignaleingangsrelais verbunden ist, ein normalerweise offener Kontakt eines Signaleingangsrelais parallel mit dem normalerweise offenen Kontakt des Hochgeschwindigkeitsleistungsschalterschließfreigaberelais verbunden ist und mit dem normalerweise offenen Kontakt des Schließerlaubnissignaleingangsrelais verbunden ist, um eine Aktion des Schließschützes des Hochgeschwindigkeitsleistungsschalters durch vier Sätze von Kontakten zu steuern, die in Reihe und parallel verbunden sind.

7. Traktionssteuersimulationssystem nach Anspruch 1, wobei die Zugleitung umfasst: eine Traktionssicherheitssteuerleitung, eine Traktionssteuerleitung, eine Traktions- und Bremssteuerleitung, eine Fahrtrichtungs- und Hochgeschwindigkeitsschaltersteuerleitung; und
wobei die Traktionssicherheitssteuerleitung mit der Traktionssicherheitsschleifensimulationsschaltung verbunden ist, die Traktionssteuerleitung mit der Traktionssteuersimulationsschaltung der Fahrersteuerung verbunden ist, die Traktions- und Bremssteuerleitung mit der Fahrtrichtungs- und Traktions- und Bremssteuersimulationsschaltung verbunden ist und die Fahrtrichtungs- und Hochgeschwindigkeitsschaltersteuerleitung mit der Fahrtrichtungs- und Traktions- und Bremssteuersimulationsschaltung beziehungsweise mit der Hochgeschwindigkeitsleistungsschaltersteuersimulationsschaltung verbunden ist.

8. Traktionssteuerverfahren, das auf die Hauptsteuervorrichtung der zwei Hauptsteuervorrichtungen (101, 102) im Steuerzustand im Traktionssteuersimulationssystem nach Anspruch 1 angewendet wird, wobei das Traktionssteuerverfahren umfasst:
Empfangen einer Vielzahl von Steuerbefehlen, die von einem Benutzer sequenziell in chronologischer Reihenfolge eingegeben werden, und Ausgeben jedes der Vielzahl von an jeder Ausführungsvorrichtung (201-20n) durch eine entsprechende Steuerleitung im Steuerleitungssatz (301) empfangenen Steuerbefehlen;
Bestimmen, durch jede Ausführungsvorrichtung (201-20n), ob jeder der Vielzahl von Steuerbefehlen in der Reihenfolge ein gültiger Steuerbefehl ist; und
Ausführen eines Vorgangs, der dem gültigen Steuerbefehl entspricht, falls bestimmt wird, dass ein Steuerbefehl der gültige Steuerbefehl ist.

9. Traktionssteuerverfahren nach Anspruch 8, wobei das Empfangen der Vielzahl von Steuerbefehlen, die von dem Benutzer sequenziell in chronologischer Reihenfolge eingegeben werden, und das Ausgeben jedes der Vielzahl von Steuerbefehlen an jede Ausführungsvorrichtung (201-20n) durch die entsprechende Steuerleitung im Steuerleitungssatz (301) umfasst:
Empfangen eines vom Benutzer eingegebenen aktuellen Steuerbefehls;
Ausgeben des aktuellen Steuerbefehls an jede Ausführungsvorrichtung (201-20n) über eine Steuerleitung, die dem aktuellen Steuerbefehl entspricht;
Empfangen eines nächsten von dem Benutzer eingegebenen Steuerbefehls in einem Fall, in dem der aktuelle Steuerbefehl von einer durch den aktuellen Steuerbefehl gesteuerten Zielausführungsvorrichtung (201-20n) erfolgreich ausgeführt wird; und
Aktualisieren des nächsten Steuerbefehls auf den aktuellen Steuerbefehl, erneutes Ausführen des Schritts des Ausgebens des aktuellen Steuerbefehls an jede Ausführungsvorrichtung (201-20n) über eine Steuerleitung, die dem aktuellen Steuerbefehl entspricht, der Reihe nach, bis alle von dem Benutzer eingegebenen Steuerbefehle empfangen worden sind.

## Revendications

1. Système de simulation de commande de traction pour un véhicule sur rails, comprenant : un ensemble de lignes de commande (301), deux dispositifs de commande principaux (101, 102) et au moins un dispositif d'exécution (201 - 20n), dans lequel :
les deux dispositifs principaux de commande (101, 102) et le dispositif d'exécution (201 - 20n) sont reliés à l'ensemble de lignes de commande (301) ;
les deux dispositifs principaux de commande (101, 102) sont configurés pour mettre en oeuvre une fonction de commande de traction et une fonction de surveillance de traction d'un dispositif de commande de traction sur le véhicule sur rails, et seulement un dispositif de commande principal des deux dispositifs de commande principaux (101, 102) est dans un état de commande au même moment ;
une ligne de commande dans l'ensemble de lignes de commande (301) est configurée pour mettre en oeuvre une fonction de transmission de données d'une ligne de train sur le véhicule sur rails ;
le dispositif d'exécution (201 - 20n) est configuré pour mettre en oeuvre une fonction d'exécution d'opération d'un équipement d'exécution de traction sur le véhicule sur rails ; et
les deux dispositifs de commande principaux (101, 102) sont en outre configurés pour : transmettre une instruction de commande de véhicule au dispositif d'exécution (201 - 20n) par l'intermédiaire de la ligne de commande dans l'ensemble de lignes de commande (301), et commander le dispositif d'exécution (201 - 20n) pour effectuer une opération correspondant à l'instruction de commande de véhicule.

2. Système de simulation de commande de traction selon la revendication 1, dans lequel les deux dispositifs de commande principaux (101, 102) comprennent chacun : une unité de simulation d'affichage, une unité de simulation de processeur, un circuit de simulation de commande de traction de dispositif de commande de conducteur, un circuit de simulation de direction de déplacement et de commande de freinage de traction, un circuit de simulation de commande de disjoncteur à grande vitesse, un circuit de simulation de boucle de sécurité de traction, un circuit de simulation de commande de retard à vitesse nulle de protection automatique de train (ATP), et un circuit de simulation de commande de convertisseur de traction ;
dans lequel l'unité de simulation d'affichage, le circuit de simulation de commande de traction de dispositif de commande de conducteur, le circuit de simulation de direction de déplacement et de commande de freinage de traction, et le circuit de simulation de commande de convertisseur de traction sont reliés à l'unité de simulation de processeur ; le circuit de simulation de commande de retard à vitesse nulle ATP est relié au circuit de simulation de commande de traction de dispositif de commande de conducteur ; le circuit de simulation de boucle de sécurité de traction, le circuit de simulation de commande de disjoncteur à haute vitesse, le circuit de simulation de direction de déplacement et de commande de freinage de traction, et le circuit de simulation de commande de traction de dispositif de commande de conducteur sont reliés à l'ensemble de lignes de commande (301) ; et le circuit de simulation de commande de convertisseur de traction et l'unité de simulation de processeur sont tous deux reliés au dispositif d'exécution (201 - 20n) ;
dans lequel l'unité de simulation d'affichage est configurée pour afficher des données à afficher envoyées par l'unité de simulation de processeur ;
dans lequel le circuit de simulation de commande de traction de dispositif de commande de conducteur est configuré pour générer et délivrer en sortie une instruction de traction de dispositif de commande de conducteur ;
dans lequel le circuit de simulation de direction de déplacement et de commande de freinage de traction est configuré pour générer et délivrer en sortie une instruction de commande de direction de déplacement et une instruction de freinage de traction ;
dans lequel le circuit de simulation de commande de disjoncteur à haute vitesse est configuré pour générer et délivrer en sortie une instruction de commande de disjoncteur à haute vitesse ;
dans lequel le circuit de simulation de boucle de sécurité de traction est configuré pour générer et délivrer en sortie une instruction de commande de boucle de sécurité de traction ;
dans lequel le circuit de simulation de commande de retard à vitesse nulle ATP est configuré pour établir une boucle de sécurité de traction ;
dans lequel le circuit de simulation de commande de convertisseur de traction est configuré pour générer et délivrer en sortie une instruction de commande de convertisseur de traction ; et
dans lequel l'unité de simulation de processeur est configurée pour : recevoir des instructions du circuit de simulation de commande de traction de dispositif de commande de conducteur, du circuit de simulation de direction de déplacement et de commande de freinage de traction, et du circuit de simulation de commande de convertisseur de traction, et délivrer en sortie les instructions à l'unité de simulation d'affichage pour l'affichage.

3. Système de simulation de commande de traction selon la revendication 1, dans lequel dans le circuit de simulation de boucle de sécurité de traction, un contact normalement ouvert d'un relais d'activation de cabine de conducteur dans un état de commande, un contact normalement fermé d'un commutateur de sélection de porte, un contact normalement ouvert d'un relais de coupure d'ATP, un contact normalement ouvert d'une porte gauche étant un relais fermé, un contact normalement ouvert d'une porte droite étant un relais fermé, un contact normalement ouvert d'un relais de décharge de freinage, un contact normalement ouvert d'un relais de décharge de freinage d'urgence, et un contact normalement ouvert d'un relais de décharge de freinage de stationnement sont reliés en série et sont reliés à une ligne de commande de sécurité de traction dans l'ensemble de lignes de commande (301) ;
dans lequel la ligne de commande de sécurité de traction est reliée à un contact normalement fermé du relais d'activation de cabine de conducteur dans un état de non-commande, pour former une boucle de surveillance de sécurité de traction fermée ;
dans lequel un contact normalement ouvert d'un commutateur de dérivation de fermeture de porte est relié en parallèle à un circuit comprenant le contact normalement ouvert du relais de fermeture de la porte gauche et le contact normalement ouvert du relais de fermeture de la porte droite reliés en série ; et
dans lequel un contact normalement ouvert d'un relais ATP à vitesse nulle est relié en parallèle à un circuit comprenant le contact normalement ouvert du relais de décharge de freinage et le contact normalement ouvert du relais de décharge de freinage d'urgence reliés en série.

4. Système de simulation de commande de traction selon la revendication 2, dans lequel le nombre de dispositifs d'exécution (201 - 20n) est de trois, et chaque dispositif d'exécution (201 - 20n) comprend : une unité de simulation de disjoncteur à haute vitesse, une unité de simulation de convertisseur de traction et une unité de simulation d'exécution de moteur de traction ;
dans lequel l'unité de simulation de disjoncteur à grande vitesse et l'unité de simulation de processeur sont reliées à l'unité de simulation de convertisseur de traction respectivement ;
dans lequel le circuit de simulation de commande de convertisseur de traction est relié à l'unité de simulation de convertisseur de traction et à l'unité de simulation d'exécution de moteur de traction respectivement ;
dans lequel l'unité de simulation de disjoncteur à grande vitesse et l'unité de simulation de convertisseur de traction sont reliées à l'ensemble de lignes de commande (301) respectivement ; et
dans lequel l'unité de simulation de disjoncteur à haute vitesse obtient de l'énergie électrique à partir d'un pantographe relié à l'unité de simulation de disjoncteur à haute vitesse.

5. Système de simulation de commande de traction selon la revendication 4, dans lequel l'unité de simulation de convertisseur de traction comprend : un circuit interne d'unité de convertisseur de traction et un circuit d'interface externe d'unité de convertisseur de traction ;
ans lequel le circuit interne d'unité de convertisseur de traction comprend : un dispositif de commande logique, un convertisseur de fréquence, un relais d'entrée de commande avant, un relais d'entrée de commande arrière, un relais d'entrée de commande de freinage, un relais d'entrée de commande de traction, un relais d'entrée de commande de sécurité de traction, un relais d'entrée de commande de réinitialisation, un relais d'entrée de commande de mode de veille, un relais d'entrée de commande de position de réseau de contact, un premier relais d'entrée de puissance de travail, un deuxième relais d'entrée de puissance de travail, un relais d'entrée de sous-commande de disjoncteur à haute vitesse, un relais d'entrée de commande de boucle d'état de freinage, un relais d'entrée de commande de rétroaction d'état de disjoncteur à haute vitesse, un relais de sortie pour délivrer en sortie une commande de sortie haute tension de contacteur de ligne K, KIC, un relais de sortie pour délivrer en sortie une commande pour permettre à un disjoncteur à haute vitesse de se fermer, un relais de sortie pour sortir une commande de fermeture de disjoncteur à haute vitesse, un relais de sortie pour délivrer en sortie une commande d'état de freinage, un relais de sortie pour délivrer en sortie une commande d'état de freinage en attente, un relais de sortie pour délivrer en sortie une commande d'état de traction, et un contacteur d'alimentation de circuit principal de traction ;
dans lequel le dispositif de commande logique comprend un module CPU et un module E/S, le module E/S est connecté au convertisseur de fréquence, le module CPU est configuré pour générer un signal de commande de convertisseur de fréquence, et le module E/S est configuré pour transmettre le signal de commande de convertisseur de fréquence au convertisseur de fréquence ;
dans lequel le relais d'entrée de commande avant, le relais d'entrée de commande arrière, le relais d'entrée de commande de freinage, le relais d'entrée de commande de traction, le relais d'entrée de commande de sécurité de traction, le relais d'entrée de commande de réinitialisation, le relais d'entrée de commande de mode de veille, le relais d'entrée de commande de position de réseau de contact, le premier relais d'entrée de puissance de travail, le deuxième relais d'entrée de puissance de travail, le relais d'entrée de sous-commande de disjoncteur à haute vitesse, le relais d'entrée de commande de boucle d'état de freinage, et le relais d'entrée de commande de rétroaction d'état de disjoncteur à haute vitesse sont reliés à un port d'entrée du dispositif de commande logique ; et
dans lequel le relais de sortie pour délivrer en sortie la commande de sortie haute tension KIC, le relais de sortie pour délivrer en sortie la commande pour permettre au disjoncteur à haute vitesse de se fermer, le relais de sortie pour délivrer en sortie la commande de fermeture de disjoncteur à haute vitesse, le relais de sortie pour délivrer en sortie la commande de maintien de marche de disjoncteur à haute vitesse, le relais de sortie pour délivrer en sortie la commande d'état de freinage, le relais de sortie pour délivrer en sortie la commande d'état de freinage de veille, le relais de sortie pour délivrer en sortie la commande d'état de traction, et le contacteur d'alimentation de circuit principal de traction sont reliés à un port de sortie du dispositif de commande logique.

6. Système de simulation de commande de traction selon la revendication 4, dans lequel l'unité de simulation de disjoncteur à haute vitesse comprend : un relais d'entrée de signal de disjoncteur à haute vitesse fermé, un relais d'entrée de signal haute tension de contacteur de ligne K (KIC), un relais d'entrée de signal d'autorisation de fermeture, un relais d'entrée de signal de maintien, un contacteur de fermeture de disjoncteur à haute vitesse, et un relais d'autorisation de fermeture de disjoncteur à haute vitesse, et un relais de retard de protection ;
dans lequel le relais d'entrée de signal de disjoncteur à haute vitesse fermé est relié à une interface externe d'un disjoncteur à haute vitesse fermé, et est configuré pour recevoir un signal pour fermer le disjoncteur à haute vitesse ;
dans lequel le relais d'entrée de signal haute tension de KIC est relié à une interface externe haute tension de KIC, et est configuré pour recevoir un signal effectif haute tension de KIC ;
dans lequel le relais d'entrée de signal d'autorisation de fermeture est relié à une interface externe d'autorisation de fermeture, et est configuré pour recevoir un signal d'autorisation de fermeture du disjoncteur à haute vitesse ;
dans lequel le relais d'entrée de signal de maintien est relié à une interface externe de signal de maintien, et est configuré pour recevoir un signal de maintien du disjoncteur à haute vitesse ;
dans lequel le relais d'activation de fermeture de disjoncteur à haute vitesse est relié à un contact normalement ouvert du relais d'entrée de signal d'autorisation de fermeture, et le contact normalement ouvert du relais d'entrée de signal d'autorisation de fermeture est relié en série à un contact normalement ouvert du relais d'entrée de signal de disjoncteur à haute vitesse fermé de manière à commander une action du relais d'activation de fermeture de disjoncteur à haute vitesse par l'intermédiaire de deux ensembles de contacts reliés en série ;
dans lequel le relais de retard de protection est relié à un contact normalement fermé du relais d'entrée de signal haute tension de KIC, et le contact normalement fermé du relais d'entrée de signal haute tension de KIC est relié en série à un contact normalement ouvert du contacteur de fermeture de disjoncteur à grande vitesse de manière à commander une action du relais de retard de protection par l'intermédiaire de deux ensembles de contacts reliés en série ; et
dans lequel le contacteur de fermeture de disjoncteur à haute vitesse est relié à un contact normalement fermé du relais de retard de protection, le contact normalement fermé du relais de retard de protection est relié au contact normalement ouvert du relais d'entrée de signal d'autorisation de fermeture, un contact normalement ouvert d'un relais d'entrée de signal est relié en parallèle au contact normalement ouvert du relais d'autorisation de fermeture de disjoncteur à haute vitesse, et est relié au contact normalement ouvert du relais d'entrée de signal d'autorisation de fermeture de manière à commander une action du contacteur de fermeture de disjoncteur à haute vitesse par l'intermédiaire de quatre ensembles de contacts reliés en série et en parallèle.

7. Système de simulation de commande de traction selon la revendication 1, dans lequel la ligne de train comprend : une ligne de commande de sécurité de traction, une ligne de commande de traction, une ligne de commande de traction et de freinage, une ligne de commande de direction de déplacement et de disjoncteur à grande vitesse ; et
dans lequel la ligne de commande de sécurité de traction est reliée au circuit de simulation de boucle de sécurité de traction, la ligne de commande de traction est reliée au circuit de simulation de commande de traction de dispositif de commande de conducteur, la ligne de commande de traction et de freinage est reliée au circuit de simulation de direction de déplacement et de commande de traction et de freinage, et la ligne de commande de direction de déplacement et de disjoncteur à haute vitesse est reliée au circuit de simulation de direction de déplacement et de commande de traction et de freinage et au circuit de simulation de commande de disjoncteur à haute vitesse respectivement.

8. Procédé de commande de traction, appliqué au dispositif de commande principal des deux dispositifs de commande principaux (101, 102) dans l'état de commande dans le système de simulation de commande de traction selon la revendication 1, dans lequel le procédé de commande de traction comprend :
la réception d'une pluralité d'instructions de commande entrées par un utilisateur séquentiellement dans l'ordre chronologique et la délivrance en sortie de chacune de la pluralité d'instructions de commande reçues à chaque dispositif d'exécution (201 - 20n) par l'intermédiaire d'une ligne de commande correspondante dans l'ensemble de lignes de commande (301) ;
la détermination, par chaque dispositif d'exécution (201 - 20n), si chacune de la pluralité d'instructions de commande est une instruction de commande valide à son tour ; et
l'exécution d'une opération correspondant à l'instruction de commande valide dans le cas de la détermination qu'une instruction de commande est l'instruction de commande valide.

9. Procédé de commande de traction selon la revendication 8, dans lequel la réception de la pluralité d'instructions de commande entrées par l'utilisateur séquentiellement dans l'ordre chronologique et la délivrance en sortie de chacune de la pluralité d'instructions de commande à chaque dispositif d'exécution (201 - 20n) par l'intermédiaire de la ligne de commande correspondante dans l'ensemble de lignes de commande (301) comprend :
la réception d'une instruction de commande courante entrée par l'utilisateur ;
la délivrance en sortie de l'instruction de commande actuelle à chaque dispositif d'exécution (201 - 20n) par l'intermédiaire d'une ligne de commande correspondant à l'instruction de commande actuelle ;
la réception d'une prochaine instruction de commande entrée par l'utilisateur dans un cas où l'instruction de commande actuelle est exécutée par un dispositif d'exécution cible (201 - 20n) commandé par l'instruction de commande actuelle avec succès ; et
la mise à jour de l'instruction de commande suivante sur l'instruction de commande actuelle, l'exécution à nouveau de l'étape pour délivrer en sortie l'instruction de contrôle actuelle à chaque dispositif d'exécution (201 - 20n) par l'intermédiaire d'une ligne de commande correspondant à l'instruction de commande actuelle en séquence, jusqu'à ce que toutes les instructions de commande entrées par l'utilisateur soient reçues.
